# EUROPÄISCHE PATENTSCHRIFT

(11) **EP 1 508 598 B1**
(45) Veröffentlichungstag und Bekanntmachung des Hinweises auf die Patenterteilung: **19.03.2008**
(21) Anmeldenummer: 04018502.7
(22) Anmeldetag: 04.08.2004
(51) Int. Cl.: C09B 67/22

(54) **Farbstoffmischungen von faserreaktiven Azofarbstoffen, ihre Herstellung und ihre Verwendung**
Mixture of fiberreactive azo dyes process for their preparation and use
Mélange de colorants azo reactifs procédé pour leur fabrication et usage

(30) Priorität: 16.08.2003 DE 10337637
(43) Veröffentlichungstag der Anmeldung: 23.02.2005
(60) Teilanmeldung: 06111472.4
(73) Patentinhaber: DyStar Textilfarben GmbH & Co. Deutschland KG, 65926 Frankfurt am Main (DE)
(72) Erfinder: Eichhorn, Joachim, Dr., 65929 Frankfurt am Main (DE); Russ, Werner, Dr., 65439 Flörsheim-Wicker (DE); Meier, Stefan, Dr., 60529 Frankfurt am Main (DE)

(56) Entgegenhaltungen:
- EP-A- 1 134 260
- WO-A-00/06652
- DE-A- 2 604 699
- DE-A- 19 600 765
- PATENT ABSTRACTS OF JAPAN Bd. 0140, Nr. 68 (C-0686), 8. Februar 1990 (1990-02-08) & JP 1 289868 A (KIWA KAGAKU KOGYO KK), 21. November 1989 (1989-11-21)

## Beschreibung

Die Erfindung liegt auf dem technischen Gebiet der faserreaktiven Azofarbstoffe.

Farbstoffmischungen faserreaktiver Azofarbstoffe und deren Verwendung zum Färben von Hydroxy- und Carbonamidgruppen-haltigen Material in orange bis roten Farbtönen sind beispielsweise aus den Patentschriften EP 1090962 und EP 0979848 bekannt. Die WO 00/06652 A offenbart außerdem scharlachrot färbende Farbstoffe, sowie in Beispiel 124 eine diese enthaltende schwarzfärbende Farbstoffmischung. Ein ähnliche Lehre ist auch aus Patent Abstracts Of Japan Bd. 0140, Nr. 68 (C-0686) bekannt. Darüber hinaus beschreibt die EP-A- 1 134 260 bestimmte Farbstoffe, die zur Nuancierung von Schwarzmischungen eingesetzt werden können.
Diese bekannten Produkte besitzen jedoch gewisse anwendungstechnische Mängel, wie beispielsweise eine zu große Abhängigkeit der Farbausbeute von wechselnden Färbeparametern im Färbeprozeß, oder einen ungenügenden oder unegalen Farbaufbau auf Baumwolle (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern). Folge dieser Mängel können beispielsweise schlechte Reproduzierbarkeiten der erhältlichen Färbungen sein, was letztendlich die Wirtschaftlichkeit des Färbeprozesses beeinträchtigt.
Infolgedessen besteht weiterhin ein Bedarf nach neuen Reaktivfarbstoffen bzw. Reaktivfarbstoffmischungen mit verbesserten Eigenschaften, wie hohe Substantivität bei gleichzeitig guter Auswaschbarkeit von nicht fixierten Anteilen. Sie müssen darüberhinaus auch gute färberische Ausbeuten aufweisen und eine hohe Reaktivität besitzen, wobei insbesondere Färbungen mit hohen Fixiergraden geliefert werden sollen.

Mit der vorliegenden Erfindung wurden nunmehr Farbstoffmischungen gefunden, die diese oben beschriebenen Eigenschaften in hohem Maße besitzen. Die neuen Farbstoffmischungen zeichnen sich vor allem durch hohe Fixierausbeuten und leichte Auswaschbarkeit der nicht auf der Faser fixierten Anteile aus. Zudem weisen die Färbungen gute Allgemeinechtheiten, wie beispielsweise hohe Lichtechtheit und sehr gute Nassechtheiten auf und zeigen darüberhinaus eine geringe Tendenz des Anfärbens von Polyamid bei Baumwolle/Polyamid-Mischgewebe.

Die Erfindung betrifft somit Reaktivfarbstoffmischungen, bestehend aus einem oder mehreren Farbstoffen der nachstehend angegebenen und definierten allgemeinen Formel (I) in einer Menge von 10 bis 90 Gew. % 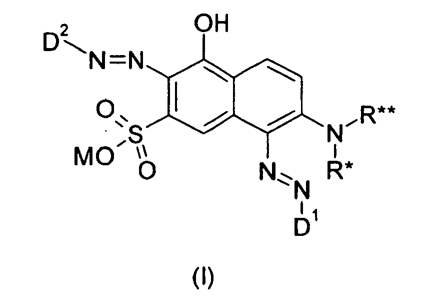 und einem oder mehreren Monoazofarbstoffen der allgemeinen Formeln (15) bis (16), jeweils in einer Menge von 0 - 10 Gew.-%, 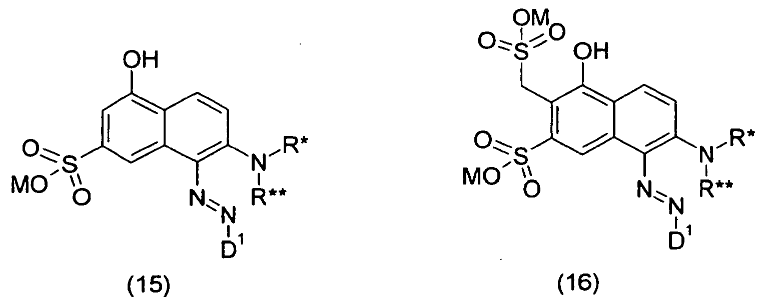 und einem oder mehreren Farbstoffen der nachstehend angegebenen und definierten allgemeinen Formeln (Ga) - (Gf), unab hängig voneinander jeweils in einer Menge von 10 bis 90 Gew.% 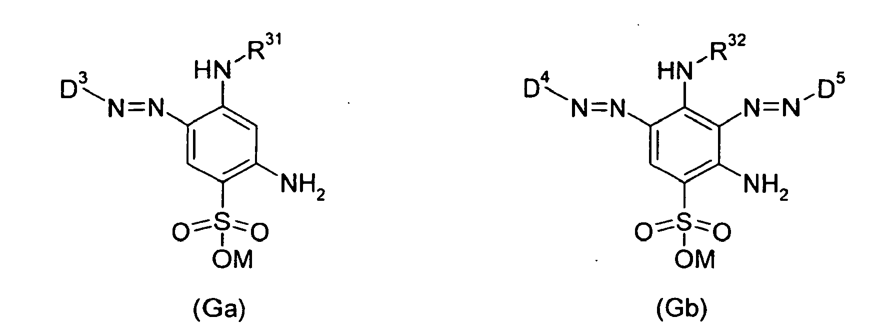 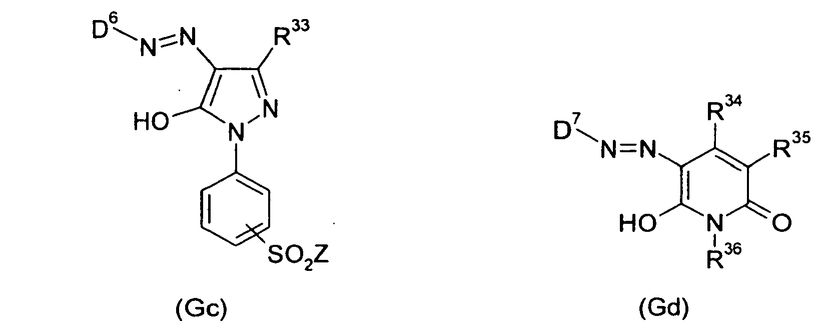 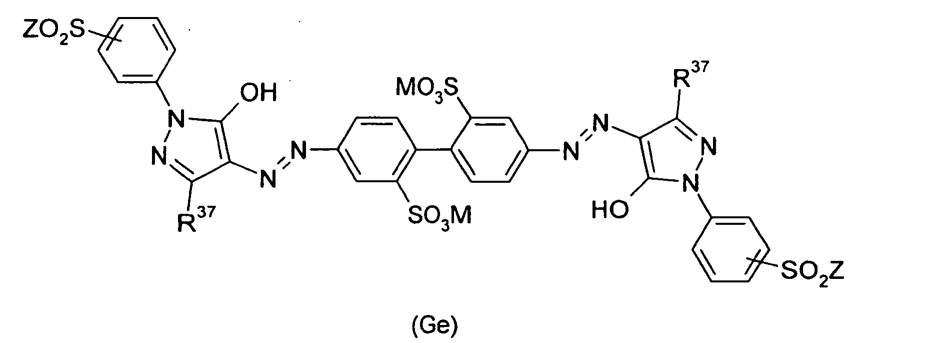 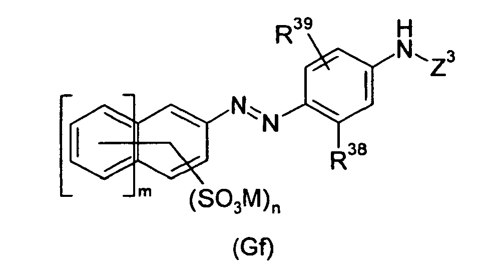 in welchen bedeuten:
D¹ bis D⁷ sind unabhängig voneinander eine Gruppe der allgemeinen Formel (1) 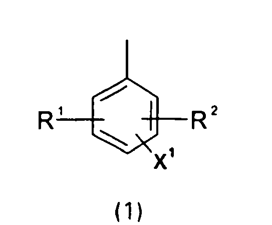
worin
R¹ und R² unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
   - X¹: für Wasserstoff oder eine Gruppe der Formel -SO₂-Z steht, wobei
   Z -CH=CH₂, -CH₂CH₂Z¹ oder Hydroxy bedeutet, worin
   Z¹ Hydroxy oder eine unter Alkaliwirkung abspaltbare Gruppe ist oder
D¹ bis D⁷ bedeuten unabhängig voneinander eine Naphthylgruppe der allgemeinen Formel (2) 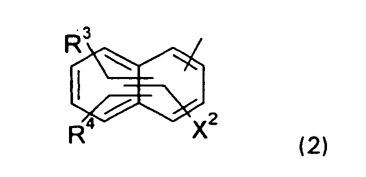 worin
   - R³ und R⁴: unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
   - X²: eine der Bedeutungen von X¹ hat; oder

D¹ bis D⁷ sind unabhängig voneinander eine Gruppe der allgemeinen Formel (3) 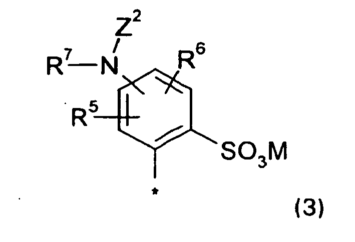 worin
   - R⁵ und R⁶: unabhängig voneinander eine der Bedeutungen von R¹ und R² haben;
   - R⁷: ist Wasserstoff, (C₁-C₄)-Alkyl, unsubstituiertes oder durch (C₁-C₄)-Alkyl, (C₁-C₄)-Alkoxy, Sulfo, Halogen oder Carboxy substituiertes Phenyl; und
   - Z²: ist eine Gruppe der allgemeinen Formel (4) oder (5) oder (6) 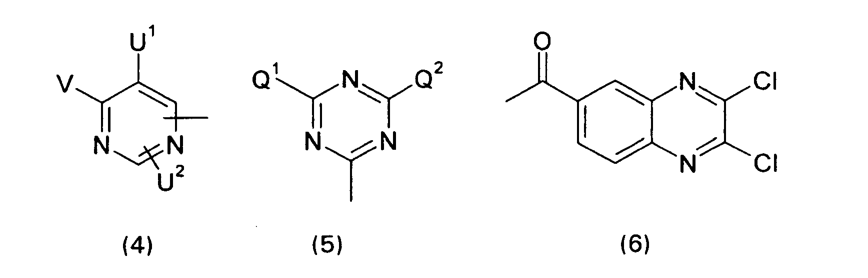
   worin
   - V: Fluor oder Chlor bedeutet;
   - U', U²: unabhängig voneinander Fluor, Chlor oder Wasserstoff sind;
   und
   - Q¹, Q²: unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (7) oder (8) bedeuten 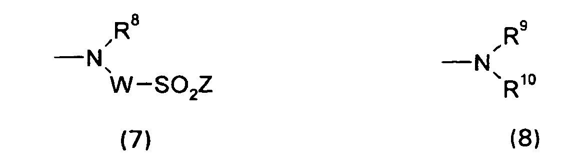 worin
   R⁸ Wasserstoff oder (C₁-C₆)-Alkyl, Sulfo-(C₁-C₆)-Alkyl oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
   R⁹ und R¹⁰ haben unabhängig voneinander eine der Bedeutungen von R⁸, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfonyl, -NR¹¹ mit R¹¹ = (C₁-C₆)-Alkyl ist;
   W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfonyl, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
   Z die obengenannte Bedeutung hat; oder
D¹ bis D⁷ stehen unabhängig voneinander für eine Gruppe der allgemeinen Formel (9) 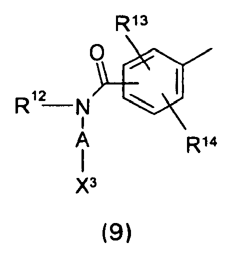 worin
   - R¹²: Wasserstoff, (C₁-C₄)-Alkyl, Aryl oder ein substituierter Arylrest ist;
   - R¹³ und R¹⁴: unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
   - A: eine Phenylengruppe der allgemeinen Formel (10) ist 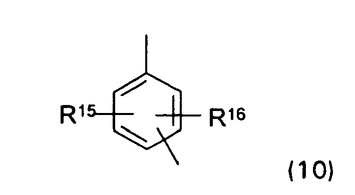 worin
   R¹⁵ und R¹⁶ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten; oder
   - A: ist eine Naphthylengruppe der allgemeinen Formel (11) 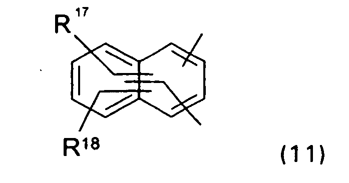 worin
   R¹⁷ nd R¹⁸ u unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten; oder
   - A: ist eine Polymethylengruppe der allgemeinen Formel (12)

   -(CR¹⁹R²⁰)ₖ- (12)

   worin
   k eine ganze Zahl größer 1 ist und
   R¹⁹ und R²⁰ unabhängig voneinander Wasserstoff, (C₁-C₄)-Alkyl, (C₁-C₄)-Alkoxy, Hydroxy, Cyano, Amido, Halogen oder Aryl sind; und
   - X³: eine der Bedeutungen von X¹ hat; und

   - R*: eine Gruppe der Formel (14)
   -CH₂-SO₃M (14)
   ist;
   - R**: Wasserstoff oder (C₁-C₄)-Alkyl ist;
   - R³¹: Wasserstoff, Acetyl, Carbamoyl ist oder für eine Gruppe der allgemeinen Formel (4) oder (5) oder (14) steht,
   - R³²: Wasserstoff oder eine Gruppe der allgemeinen Formel (14) ist,
   - R³³: Methyl, Carboxy oder Carboxyalkyl mit C₁- bis C₄-Alkyl ist,
   - R³⁴: Wasserstoff oder Methyl ist,
   - R³⁵: Wasserstoff, Cyano, Carbamoyl, Carboxy oder eine Gruppe der allgemeinen Formel (14) ist,
   - R³⁶: Methyl, Ethyl oder β-Sulfoethyl ist,
   - R³⁷: Methyl, Carboxy oder Carboxyalkyl mit C₁- bis C₄-Alkyl ist,
   - R³⁸: Acetamido, Ureido, Methyl oder Methoxy ist,
   - R³⁹: Wasserstoff, Methyl oder Methoxy ist,
   - m: 0 oder 1 ist,
   - n: 1, 2 oder 3 ist,
   - Z³: eine der Bedeutungen von Z² hat, und
   - M: Wasserstoff, ein Alkalimetall oder ein Äquivalent eines Erdalkalimetalls
   bedeutet, wobei
   die Farbstoffe der allgemeinen Formeln (I) und (Ga) - (Gf) mindestens eine faserreaktive Gruppe der Formel -SO₂-Z oder -Z² enthalten.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Für Substituenten R stehende (C₁-C₄)-Alkylgruppen können geradkettig oder verzweigt sein und bedeuten insbesondere Methyl, Ethyl, n-Propyl, i-Propyl, n-Butyl, i-Butyl, sek.-Butyl und tert.-Butyl. Bevorzugt sind Methyl und Ethyl. Analoges gilt für (C₁-C₄)-Alkoxygruppen.

Für Substituenten R stehende Arylgruppen sind insbesondere die Phenylgruppe. Eine für R⁸ bis R¹⁰, R¹² oder R²¹ stehende substituierte Arylgruppe ist insbesondere eine mit ein, zwei oder drei voneinander unabhängigen Gruppen aus der Reihe (C₁-C₄)-Alkyl, (C₁-C₄)-Alkoxy, Hydroxy, Sulfo, Carboxy, Amido oder Halogen substituierte Phenylgruppe.
Für Substituenten R stehendes Halogen ist insbesondere Fluor, Chlor und Brom, wobei Fluor und Chlor bevorzugt sind.

Alkalisch eliminierbare Substituenten Z¹, die in β-Stellung der Ethylgruppe von Z stehen, sind beispielsweise Halogenatome, wie Chlor und Brom, Estergruppen organischer Carbon- und Sulfonsäuren, wie Alkylcarbonsäuren, ggf. substituierter Benzolcarbonsäuren und ggf. substituierter Benzolsulfonsäuren, wie die Gruppen Alkanoyloxy von 2 bis 5C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4C-Atomen, wie Dimethylamino und Diethylamino.

Z ist bevorzugt Vinyl, β-Chlorethyl und insbesondere bevorzugt β-Sulfatoethyl.

Die Gruppen "Sulfo", "Carboxy", "Thiosulfato", "Phosphato", und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, jeweils mit M der obengenannten Bedeutung.

Die Farbstoffe der allgemeinen Formel (I) und (Ga)-(Gf) können innerhalb der Bedeutung von Z unterschiedliche faserreaktive Gruppen -SO₂Z besitzen. Insbesondere können die faserreaktiven Gruppen -SO₂Z zum einen Vinylsulfonylgruppen und zum anderen Gruppen -CH₂CH₂Z¹, bevorzugt β-Sulfatoethylsulfonyl-Gruppen, bedeuten. Enthalten die Farbstoffe der allgemeinen Formel (I) und (Ga) - (Gf) teilweise Vinylsulfonylgruppen, so liegt der Anteil des jeweiligen Farbstoffes mit der Vinylsulfonylgruppe bis zu etwa 30 Mol-%, bezogen auf die jeweilige Gesamtfarbstoffmenge, vor.

Für M stehendes Alkali ist insbesondere Lithium, Natrium und Kalium. Bevorzugt steht M für Wasserstoff oder Natrium.

Der Rest R** in der allgemeinen Formel (I) bedeutet bevorzugt Wasserstoff oder Methyl wobei Wasserstoff besonders bevorzugt ist.

Die Reste R¹ und R² sind bevorzugt Wasserstoff, (C₁-C₄)-Alkylgruppen, (C₁-C₄)-Alkoxygruppen, Sulfo oder Carboxy und besonders bevorzugt Wasserstoff, Methyl, Methoxy oder Sulfo.
Die Reste R³ bis R⁶ und R¹² bis R²⁰ sind bevorzugt Wasserstoff, R³ bis R⁶, R¹⁷ und R¹⁸ sind außerdem bevorzugt Sulfo.
Die Reste R⁷ bis R¹⁰ sind bevorzugt Wasserstoff oder Methyl, R⁷ und R⁸ sind bevorzugt auch Phenyl und R⁹ und R¹⁰ sind bevorzugt 2-Sulfoethyl, 2-, 3- oder 4-Sulfophenyl oder R⁹ und R¹⁰ bilden ein cyclisches Ringsystem, das bevorzugt der Formel -(CH₂)₂-O-(CH₂)₂- entspricht.

Beispiele für Gruppen D¹ bis D⁷ der allgemeinen Formel (1) und (2) sind 2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-4-(β-sulfatoethylsulfonyl)-phenyl, 2-Chlor-5-(β-sulfatoethylsulfonyl)-phenyl, 2-Brom-4-(β-sulfatoethylsulfonyl)-phenyl, 2-Sulfo-4-(β-sulfatoethylsulfonyl)-phenyl, 2-Sulfo-5-(β-sulfatoethylsulfonyl)-phenyl, 2-Methoxy-5-(β-sulfatoethylsulfonyl)-phenyl, 2-Ethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-Methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2- oder 3- oder 4-Vinylsulfonyl-phenyl, 2-Sulfo-4-vinylsulfonyl-phenyl, 2-Chlor-4-(β-chlorethylsulfonyl)-phenyl, 2-Chlor-5-(β-chlorethylsulfonyl)-phenyl, 3- oder 4-(β-Acetoxyethylsulfonyl)-phenyl, 6- oder 8-(β-Sulfatoethylsulfonyl)-naphth-2-yl, 6-(β-Sulfatoethylsulfonyl)-1-sulfo-naphth-2-yl und 8-(β-Sulfatoethylsulfonyl)-6-sulfonaphth-2-yl, hiervon bevorzugt sind 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl und 3- oder 4-Vinylsulfonyl-phenyl, oder D¹ bis D⁷ entsprechen einer Gruppe der allgemeinen Formeln (3) oder (9), wobei R⁵ bis R⁷ und R¹² bis R¹⁴ die oben beschriebenen bevorzugten Bedeutungen besitzen.

Im Falle, daß D¹ bis D⁷ für eine Gruppe der allgemeinen Formel (1) und X¹ für-SO₂Z stehen, steht die SO₂Z-Gruppe bevorzugt in meta- oder para-Stellung zur Diazogruppe und im Falle, daß D¹ bis D⁷ für eine Gruppe der allgemeinen Formel (2) steht, steht die Bindung, die zur Diazogruppe führt bevorzugt in β-Stellung an den Naphthalinkern gebunden.

Im Falle, daß A für Phenylen und X³ für-SO₂Z stehen, steht die SO₂Z-Gruppe bevorzugt in meta- oder para-Stellung zum Stickstoffatom. In der Gruppe der allgemeinen Formel (9) steht die Carbonamid-Gruppe bevorzugt in para- oder meta-Position zur Diazogruppe. Im Falle, daß A für Naphthylen steht, steht die Bindung, die zum Stickstoffatom führt, bevorzugt in β-Stellung an den Naphthalinkern gebunden.

Beispiele für für A stehende Substituenten sind insbesondere 1,2-Phenylen, 1,3-Phenylen, 1,4-Phenylen, 2-Chlor-1,4-phenylen, 2-Chlor-1,5-phenylen, 2-Brom-1,4-phenylen, 2-Sulfo-1,4-phenylen, 2-Sulfo-1,5-phenylen, 2-Methoxy-1,5-phenylen, 2-Ethoxy-1,5-phenylen, 2,5-Dimethoxy-1,4-phenylen, 2-Methoxy-5-methyl-4-phenylen, 2-Methyl-1,4-phenylen, 2,6-Naphthylen, 2,8-Naphthylen, 1-Sulfo-2,6-naphthylen, 6-Sulfo-2,8-naphthylen oder 1,2-Ethylen und 1,3-Propylen.

Besonders bevorzugt steht A für 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen oder 1,2-Ethylen und 1,3-Propylen, wobei im Falle der beiden zuletzt genannten Alkylengruppen der Rest R¹² bevorzugt Phenyl und 2-Sulfophenyl bedeutet.

k bedeutet bevorzugt die Zahl 2 oder 3.

W ist bevorzugt 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen, 1,2-Ethylen, 1,3-Propylen.

Beispiele für die Gruppen Q¹ und Q² in der allgemeinen Formel (5) sind unabhängig voneinander Fluor, Chlor, Hydroxy, Methoxy, Ethoxy, Phenoxy, 3-Sulfophenoxy, 4-Sulfophenoxy, Methylmercapto, Cyanamido, Amino, Methylamino, Ethylamino, Morpholino, Piperidino, Phenylamino, Methylphenylamino, 2-Sulfophenylamino, 3-Sulfophenylamino, 4-Sulfophenylamino, 2,4-Disulfophenylamino, 2,5-Disulfophenylamino, 2-Sulfoethylamino, N-Methyl-2-sulfoethylamino, Pyridino, 3-Carboxypyridino, 4-Carboxypyridino, 3-Carbamoylpyridino, 4-Carbamoylpyridino, 2-(2-Sulfatoethylsulfonyl)-phenylamino, 3-(2-Sulfatoethylsulfonylrphenylamino, 4-(2-Sulfatoethylsulfonyl)-phenylamino, N-Ethyl-3-(2-sulfatoethylsulfonyl)-phenylamino, N-Ethyl-4-(2-sulfatoethylsulfonyl)-phenylamino, 2-Carboxy-5-(2-sulfatoethylsulfonyl)-phenylamino), 2-Chlor-4-(2-sulfatoethylsulfonyl)-phenylamino, 2-Chlor-5-(2-sulfatoethylsulfonyl)-phenylamino, 2-Brom-4-(2-sulfatoethylsulfonyl)-phenylamino, 2-Sulfo-4-(2-sulfatoethylsulfonyl)-phenylamino, 2-Sulfo-5-(2-sulfatoethylsulfonyl)-phenylamino, 2-Methoxy-5-(2-sulfatoethylsulfonyl)-phenylamino, 2,5-Dimethoxy-4-(2-sulfatoethylsulfonyl)-phenylamino, 2-Methoxy-5-methyl-4-(2-sulfatoethylsulfonyl)-phenylamino, 2-Methyl-4-(2-sulfatoethylsulfonyl)-phenylamino, 2-(Vinylsulfonyl)-phenylamino, 3-(Vinylsulfonyl)-phenylamino, 4-(Vinylsulfonyl)-phenylamino), N-Ethyl-3-(vinylsulfonyl)-phenylamino, N-Ethyl-4-(vinylsulfonyl)-phenylamino, 6-(2-Sulfatoethylsulfonyl)-naphth-2-ylamino, 8-(2-Sulfatoethylsulfonyl)-naphth-2-ylamino, 8-(2-Sulfatoethylsulfonyl)-6-sulfo-naphth-2-ylamino, 3-(2-(2-Sulfatoethylsulfonyl)-ethylcarbamoyl)-phenylamino, 4-(2-(2-Sulfatoethylsulfonyl)-ethylcarbamoyl)-phenylamino, 3-(2-(Vinylsulfonyl)-ethylcarbamoyl)-phenylamino, 4-(2-(2-Vinylsulfonyl)-ethylcarbamoyl)-phenylamino, 4-(N-Methyl-2-(2-sulfatoethylsulfonyl)-ethylcarbamoyl)-phenylamino, 4-(N-Phenyl-2-(2-sulfatoethylsulfonyl)-ethylcarbamoyl)-phenylamino, 4-(3-(2-Sulfatoethylsulfonyl)-phenylcarbamoyl)-phenylamino, 4-(4-(2-Sulfatoethylsulfonyl)-phenylcarbamoyl)-phenylamino, 3-(3-(2-Sulfatoethylsulfonyl)-phenylcarbamoyl)-phenylamino, 3-(4-(2-Sulfatoethylsulfonyl)-phenylcarbamoyl)-phenylamino, 3-(2-Sulfatoethylsulfonyl)-propylamino, N-Methyl-N-(2-(2-sulfatoethylsulfonyl)-ethyl)-amino, N-Phenyl-N-(2-(2-sulfatoethylsulfonyl)-ethyl)-amino, N-Phenyl-N-(2-(2-sulfatoethylsulfonyl)-propyl)-amino.

Bevorzugt stehen die Gruppen Q¹ und Q² in der allgemeinen Formel (5) unabhängig voneinander für Fluor, Chlor, Cyanamido, Morpholino, 2-Sulfophenylamino, 3-Sulfophenylamino, 4-Sulfophenylamino, N-Methyl-2-sulfoethylamino, 3-Carboxypyridino, 4-Carboxypyridino, 3-Carbamoylpyridino, 4-Carbamoylpyridino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino), 4-(3-(2-Sulfatoethylsulfonyl)-phenylcarbamoyl)-phenylamino, 4-(4-(2-Sulfatoethylsulfonyl)-phenylcarbamoyl)-phenylamino, 3-(3-(2-Sulfatoethylsulfonyl)-phenylcarbamoyl)-phenylamino, 3-(4-(2-Sulfatoethylsulfonyl)-phenylcarbamoyl)-phenylamino, N-Methyl-N-(2-(2-sulfatoethylsulfonyl)-ethyl)-amino, N-Phenyl-N-(2-(2-sulfatoethylsulfonyl)-ethyl)-amino.

Besonders bevorzugt stehen die Gruppen Q¹ und Q² in der allgemeinen Formel (5) unabhängig voneinander für Fluor, Chlor, Cyanamido, Morpholino, 2-Sulfophenylamino, 3-Sulfophenylamino, 4-Sulfophenylamino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino), N-Methyl-N-(2-(2-sulfatoethylsulfonyl)-ethyl)-amino, N-Phenyl-N-(2-(2-sulfatoethylsulfonyl)-ethyl)-amino.

Beispiele für die Gruppe Z² und Z³ sind 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 4,5-Difluor-pyrimidin-6-yl, 5-Chlor-4-fluor-pyrimidin-6-yl, 2,4,5-Trichlor-pyrimidin-6-yl, 4,5-Dichlor-pyrimidin-6-yl, 2,4-Dichlor-pyrimidin-6-yl, 4-Fluor-pyrimidin-6-yl, 4-Chlor-pyrimidin-6-yl, oder eine Gruppe der allgemeinen Formel (5) mit den oben angegebenen Beispielen für Q¹ und Q², oder eine Gruppe der Formel (6).

Bevorzugt bedeutet Z² und Z³ 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl oder eine Gruppe der allgemeinen Formel (5) mit den oben angegebenen bevorzugten Gruppen Q¹ und Q².

Besonders bevorzugt steht Z² und Z³ für 2,4-Difluor-pyrimidin-6-yl, 5-Chlor-2,4-difluor-pyrimidin-6-yl oder für eine Gruppe der allgemeinen Formel (5) mit den oben angegebenen besonders bevorzugten Gruppen Q¹ und Q².

In Formel (Ga) steht R³¹ bevorzugt für Wasserstoff, Acetyl, 2,4-Difluor-pyrimidin-6-yl, 5-Chlor-2,4-difluor-pyrimidin-6-yl oder für eine Gruppe der allgemeinen Formel (5) mit den oben angegebenen besonders bevorzugten Gruppen Q¹ und Q²; in Formel (Gb) steht R³² bevorzugt für Wasserstoff;
in den Formeln (Gc) und (Ge) stehen R³³ und R³⁷ bevorzugt für Carboxy oder Methyl;
in Formel (Gd) steht R³⁴ bevorzugt für Methyl, R³⁵ für Cyano, Carbamoyl oder für eine Gruppe der Formel (14) und R³⁶ für Methyl oder Ethyl;
in Formel (Gf) steht m bevorzugt für 1 und n für 1 oder 2.

Bevorzugte Farbstoffmischungen enthalten einen oder mehrere, wie zwei oder drei, bevorzugt 1 oder 2 Farbstoffe der angegebenen und definierten allgemeinen Formel (I-a), 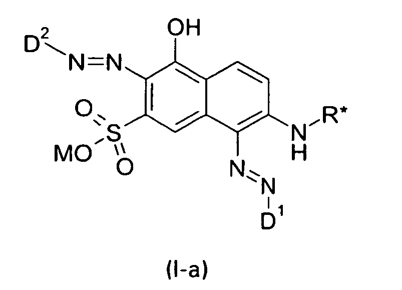 und einen oder mehrere Farbstoffe der allgemeinen Formel (Ga), (Gb), (Ge) und (Gf), 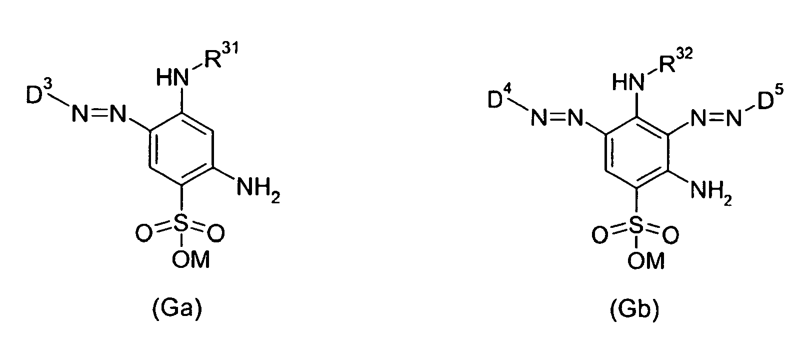 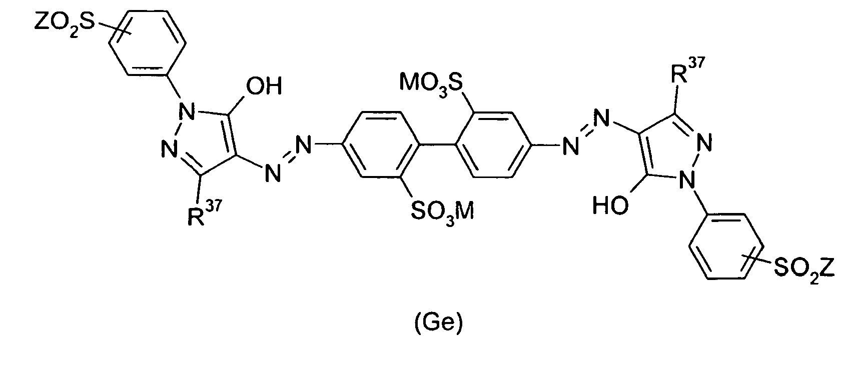 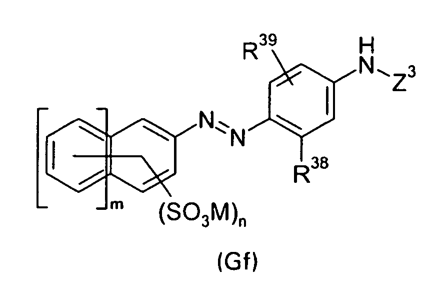 in welchen D¹ bis D⁵, R*, R³¹, R³², R³⁷, R³⁸, R³⁹, Z, Z³, m, n und M die oben genannten Bedeutungen haben.

Weitere bevorzugte Farbstoffmischungen enthalten mindestens einen Farbstoff der allgemeinen Formel (I-b), 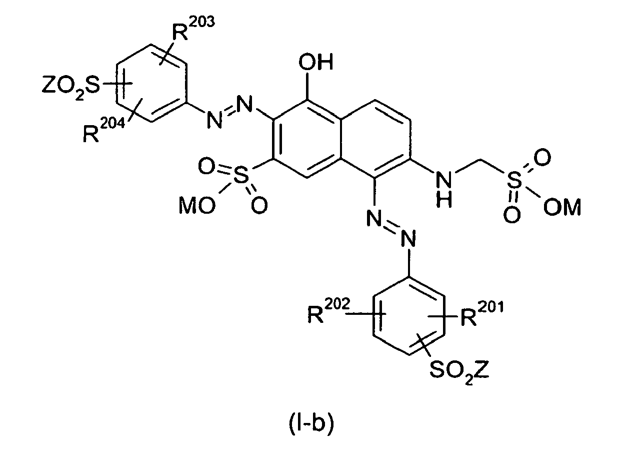 und mindestens einen Farbstoff der allgemeinen Formeln (Ga), (Gb), (Ge) und (Gf), worin D³ bis D⁵, R³¹, R³², R³⁷, R³⁸, R³⁹, Z, Z³, m, n und M die oben angegebenen Bedeutungen besitzen und R²⁰¹ bis R²⁰⁴ unabhängig voneinander für Wasserstoff, Methyl, Methoxy oder Sulfo stehen.

Besonders bevorzugte Farbstoffmischungen enthalten einen oder mehrere, wie zwei oder drei, bevorzugt 1 oder 2 Farbstoffe der angegebenen und definierten allgemeinen Formel (I-c), 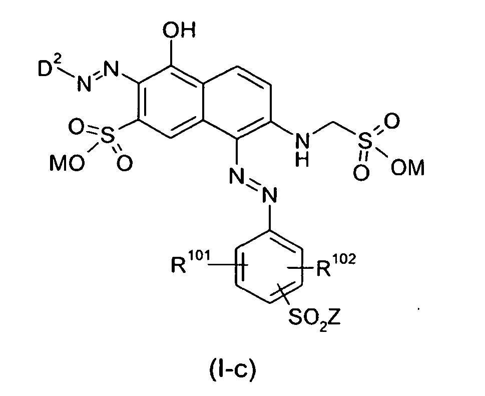 und einen oder mehrere Farbstoffe der allgemeinen Formel (Ga-a) und (Gb-a), 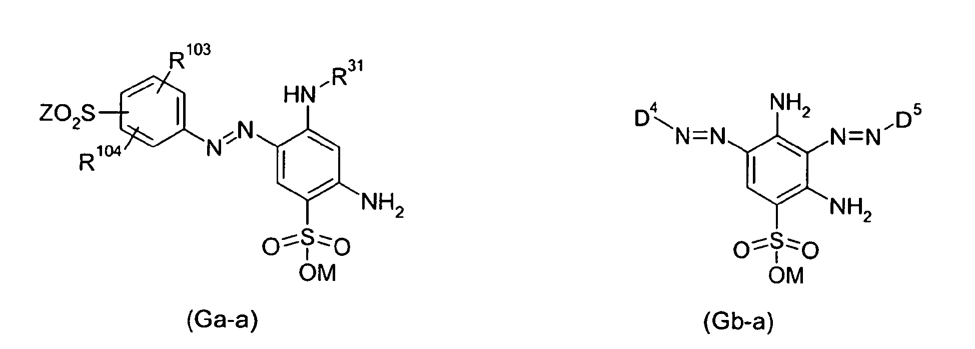 in welchen D², D⁴, D⁵, R³¹, Z und M die oben genannten Bedeutungen haben.

In den allgemeinen Formeln (I-c) und (Ga-a) stehen R¹⁰¹ bis R¹⁰⁴ unabhängig voneinander bevorzugt für Wasserstoff, C₁-C₄-Alkyl, C₁-C₄-Alkoxy, Sulfo, Carboxy oder Halogen und Z für Vinyl oder β-Sulfatoethyl, ganz besonders bevorzugt sind in Formel (I-c) und (Ga-a) R¹⁰¹ bis R¹⁰⁴ unabhängig voneinander Wasserstoff, Methyl, Methoxy oder Sulfo und Z Vinyl oder β-Sulfatoethyl.

Die erfindungsgemäßen Farbstoffmischungen können als Präparation in fester oder in flüssiger (gelöster) Form vorliegen. In fester Form enthalten sie, so weit erforderlich, die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, außerdem Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 20 bis 90 Gew.-%, bezogen auf die enthaltene Präparation, enthalten. Die Puffersubstanzen liegen in der Regel in einer Gesamtmenge von bis zu 5 Gew.-%, bezogen auf die Präparation, vor.

Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%, wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Farbstoffe der allgemeinen Formel (I) sind in DE 196 00 765 A1 beschrieben und Farbstoffe der allgemeinen Formeln (Ga) bis (Gf) sind zahlreich in der Literatur beschrieben und über Standardsynthesemethoden zugänglich. Farbstoffe der allgemeinen Formeln (15) und (16) werden teilweise während der Synthese von Farbstoffen der allgemeinen Formeln (I) gebildet.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können oder durch dem Fachmann geläufige Diazotierung und Kupplung geeigneter Mischungen von Diazo- und Kupplungskomponenten in den gewünschten Mengenverhältnissen.

Beispielsweise kann, wenn die Diazokomponenten mit den Gruppen D² und D³ und/oder D⁵ und/oder D⁶ und/oder D⁷ gemäß den allgemeinen Formeln (I) und (Ga) und/oder (Gb) und/oder (Gc) und/oder (Gd) gleiche Bedeutung besitzen, ein Amin der allgemeinen Formel (17)

D² - NH₂ (17),

worin D² wie oben angegeben definiert ist, in üblicher Weise diazotiert und die erhaltene Diazoniumverbindung anschließend mit einer wässrigen Lösung oder Suspension einer Mischung mit festgelegtem Verhältnis eines Monoazofarbstoffs gemäß der allgemeinen Formel (15) und mindestens eines Kupplers der allgemeinen Formel (13) und/oder (18) und/oder (19) und/oder eines Monoazofarbstoffs gemäß der allgemeinen Formel (20) 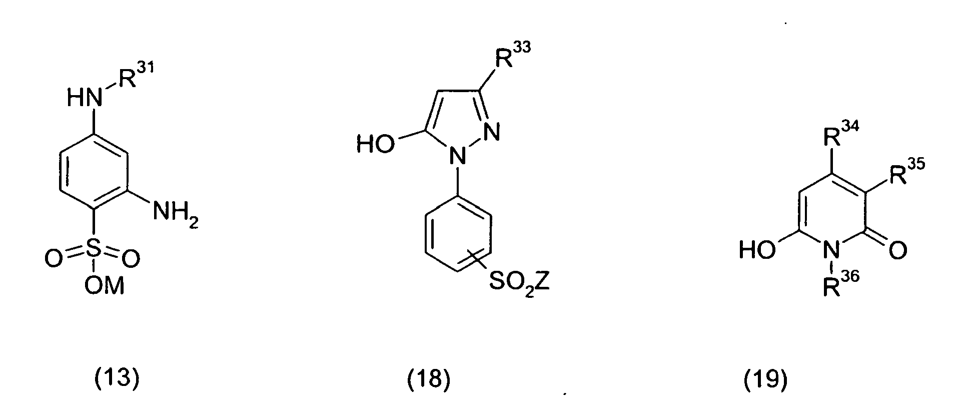 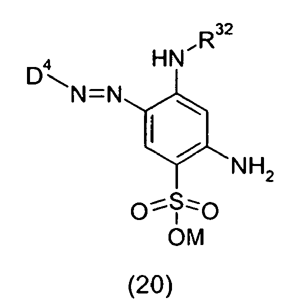 worin D⁴, R*, R**, R³¹, R³², R³³, R³⁴, R³⁵, R³⁶, Z und M wie oben angegeben definiert sind, umgesetzt werden.

Alternativ kann die erfindungsgemäße Farbstoffmischung für den Fall, daß die Gruppen D¹, D² und D⁴ , D⁵ gemäß den allgemeinen Formeln (I) und (Gb) gleiche Bedeutung besitzen, hergestellt werden, indem man ein Amin der allgemeinen Formel (21),

D¹ - NH₂ (21),

worin D¹ wie oben angegeben definiert ist, in üblicher Weise diazotiert und auf eine Mischung der Kupplungskomponenten (22) und (23), 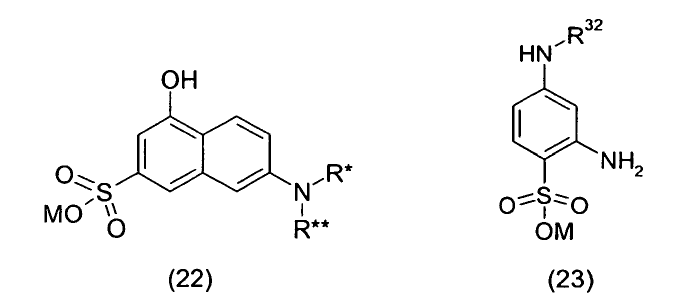 worin R*, R**, R³² und M wie oben angegeben definiert sind, zuerst bei einem pH-Wert unterhalb von 3 in erster Stufe kuppelt und anschließend durch pH-Wert-Erhöhung zu einer Mischung der Farbstoffe der allgemeinen Formeln (I) und (Gb) weiter kuppelt.

Die erfindungsgemäße Farbstoffmischung wird in an und für sich bekannter Weise durch Aussalzen beispielsweise mit Kochsalz oder Kaliumchlorid oder durch Sprühtrocknung bzw. Eindampfen isoliert.

Es können auch die bei der Synthese der Farbstoffe der allgemeinen Formel (I) und (Ga) bis (Gf) anfallenden Lösungen, ggf. nach Zusatz einer Puffersubstanz und ggf. nach Konzentrierung, direkt als Flüssigpräparationen der färberischen Verwendung zugeführt werden.

Farbstoffmischungen die neben β-Chloroethylsulfonyl oder β-Thiosulfatoethylsulfonyl oder β-Sulfatoethylsulfonyl-Gruppen auch Vinylsulfonylgruppen als reaktive Reste haben, können nicht nur ausgehend von entsprechend substituierten Vinylsulfonyl-Anilinen oder Naphthylaminen synthetisiert werden, sondern auch durch Umsetzung einer Farbstoffmischung, worin Z für β-Chloroethyl, β-Thiosulfatoethyl, oder β-Sulfatoethyl steht, mit einer für den gewünschten Anteil erforderlichen Menge an Alkali und Überführung der genannten β-substituierten Ethylsulfonylgruppen in Vinylsulfonylgruppen erhalten werden. Diese Überführung erfolgt in einer dem Fachmann geläufigen Art und Weise.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie beispielsweise in WO 96/37641 und WO 96/37642 sowie in EP-A-0 538 785 und EP-A-0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-1 1 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, beispielsweise im Verhältnis Ware zu Flotte von 1 : 5 bis 1 : 100, bevorzugt 1 : 6 bis 1 : 30, unter Verwendung von verschiedensten säurebindenden Mitteln und gegebenenfalls neutralen Salzen soweit erforderlich, wie Natriumchlorid oder Natriumsulfat, Färbungen mit sehr guten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondene 45 bis 65°C, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, oder in kontinuierlicher Färbeweise, beispielsweise mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie beispielsweise Mischungen aus Natronlauge und Wasserglas.

Weiterhin betrifft die vorliegende Erfindung die Verwendung der erfindungsgemäßen Farbstoffmischungen in Drucktinten für den digitalen Textildruck nach dem Ink-Jet Verfahren.

Die erfindungsgemäßen Drucktinten enthalten die erfindungsgemäßen Reaktivfarbstoffmischungen, beispielsweise in Mengen von 0,1 Gew.-% bis 50 Gew.-%, bevorzugt in Mengen von 1 Gew.-% bis 30 Gew.-% und besonders bevorzugt in Mengen von 1 Gew.-% bis 15 Gew.-% bezogen auf das Gesamtgewicht der Tinte. Ebenfalls enthalten sein können Kombinationen der genannten Reaktivfarbstoffmischungen mit anderen Reaktivfarbstoffen, die im Textildruck Verwendung finden. Für den Einsatz der Tinten im Continuous flow Verfahren kann durch Elektrolytzusatz eine Leitfähigkeit von 0,5 bis 25 mS/m eingestellt werden.
Als Elektrolyt eignen sich beispielsweise: Lithiumnitrat, Kaliumnitrat. Die erfindungsgemäßen Farbstofftinten können organische Lösungsmittel mit einem Gesamtgehalt von 1-50%, bevorzugt von 5-30 Gew.-% enthalten. Geeignete organische Lösungsmittel sind beispielsweise Alkohole, z. B. Methanol, Ethanol, 1-Propanol, Isopropanol, 1-Butanol, tert. Butanol, Pentylalkohol, mehrwertige Alkohole z. B.: 1,2-Ethandiol, 1,2,3-Propantriol, Butandiol, 1,3- Butandiol, 1,4-Butandiol, 1,2-Propandiol, 1,3-Propandiol, Pentandiol, 1,4-Pentandiol, 1,5-Pentandiol, Hexandiol, D,L-1,2-Hexandiol, 1,6-Hexandiol, 1,2,6-Hexantriol, 1,2- Octandiol, Polyalkylenglykole, z. B.: Polyethylenglykol, Polypropylenglykol, Alkylenglykole mit 2 bis 8 Alkylengruppen, z. B.: Monoethylenglykol, Diethylenglykol, Triethylenglykol, Tetraethylenglykol, Thioglykol, Thiodiglykol, Butyltriglykol, Hexylenglykol, Propylenglykol, Dipropylenglykol, Tripropylenglykol, niedrige Alkylether mehrwertiger Alkohole, z. B.: Ethylenglykolmonomethylether, Ethylenglykolmonoethylether, Ethylenglykolmonobutylether, Diethylenglykolmonomethylether, Diethylenglykolmonoethylether, Diethylenglykolmonobutylether, Diethylenglykolmonohexylether, Triethylenglykolmonomethylether, Triethylenglykolmonobutylether, Tripropylenglykolmonomethylether, Tetraethylenglykolmonomethylether, Tetraethylenglykolmonobutylether, Tetraethylenglykoldimethylether, Propylenglykolmonomethylether, Propylenglykolmonoethylether, Propylenglykolmonobutylether, Tripropylenglykolisopropylether, Polyalkylenglykolether, wie z. B.: Polyethylenglokolmonomethylether, Polypropylenglykolglycerolether, Polyethylenglykoltridecylether, Polyethylenglykolnonylphenylether, Amine, wie z. B.: Methylamin, Ethylamin, Triethylamin, Diethylamin, Dimethylamin, Trimethylamin, Dibutylamin, Diethanolamin, Triethanolamin, N-Acetylethanolamin, N-Formylethanolamin, Ethylendiamin, Harnstoffderivate, wie z. B.: Harnstoff, Thioharnstoff, N-Methylharnstoff, N,N'-Dimethylharnstoff, Ethylenharnstoff, 1,1,3,3-Tetramethylharnstoff, Amide, wie z. B.: Dimethylformamid, Dimethylacetamid, Acetamid, Ketone oder Ketoalkohole, wie z. B.: Aceton, Diacetonalkohol, cyclische Ether, wie z. B.; Tetrahydrofuran, Trimethylolethan, Trimethylolpropan, 2- Butoxyethanol, Benzylalkohol, 2-Butoxyethanol, Gamma-butyrolacton, epsilon-Caprolactam, ferner Sulfolan, Dimethylsulfolan, Methylsulfolan, 2,4-Dimethylsulfolan, Dimethylsulfon, Butadiensulfon, Dimethylsulfoxid, Dibutylsulfoxid, N-Cyclohexyl-Pyrrolidon, N-Methyl-2-Pyrrolidon, N-Ethyl-Pyrrolidon, 2-Pyrrolidon, 1-(2-Hydroxyethyl)-2-Pyrrolidon, 1-(3-Hydroxypropyl)-2-Pyrrolidon, 1,3-Dimethyl-2-imidazolidinon, 1,3-Dimethyl-2-imidazolinon, 1,3-Bismethoxymethylimidazolidin, 2-(2-Methoxyethoxy)ethanol, 2-(2-Ethoxyethoxy)ethanol, 2-(2-Butoxyethoxy)ethanol, 2-(2-Propoxyethoxy)ethanol, Pyridin, Piperidin, Butyrolacton, Trimethylpropan, 1,2-Dimethoxypropan, Dioxan, Ethylacetat, Ethylendiamintetraacetat, Ethylpentylether, Weiterhin können die erfindungsgemäßen Drucktinten die üblichen Zusatzstoffe enthalten, wie beispielsweise Viskositätsmoderatoren um Viskositäten im Bereich von 1,5 bis 40,0 mPas in einem Temperaturbereich von 20 bis 50 °C einzustellen. Bevorzugte Tinten haben eine Viskosität von 1,5 bis 20 mPas und besonders bevorzugte Tinten haben eine Viskosität von 1,5 bis 15 mPas. Als Viskositätsmoderatoren eignen sich rheologische Additive beispielsweise: Polyvinylcaprolactam, Polyvinylpyrrolidon sowie deren Co-Polymere Polyetherpolyol, Assoziativverdicker, Polyharnstoff, Polyurethan, Natriumalginate, modifizierte Galaktomannane, Polyetherharnstoff, Polyurethan, nichtionogene Celluloseether. Als weitere Zusätze können die erfindungsgemäßen Tinten oberflächenaktive Substanzen zur Einstellung von Oberflächenspannungen von 20 bis 65 mN/m, die in Abhängigkeit von dem verwendeten Verfahren (Thermo- oder Piezotechnologie) gegebenenfalls angepasst werden.
Als oberflächenaktive Substanzen eignen sich beispielsweise: Tenside aller Art, bevorzugt nichtionogene Tenside, Butyldiglykol, 1,2-Hexandiol.
Weiterhin können die Tinten noch übliche Zusätze, wie beispielsweise Stoffe zur Hemmung des Pilz- und Bakterienwachstums in Mengen von 0,01 bis 1 Gew.-% bezogen auf das Gesamtgewicht der Tinte enthalten.
Die Tinten können in üblicher Weise durch Mischen der Komponenten in Wasser hergestellt werden.
Die erfindungsgemäßen Farbstofftinten eignen sich für den Einsatz in Tintenstrahldruckverfahren zum Bedrucken der verschiedensten vorpräparierten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die erfindungsgemäßen Drucktinten sind auch zum Bedrucken von vorbehandelten hydroxygruppenhaltigen bzw. aminogruppenhaltigen Fasern geeignet, die in Mischgeweben enthalten sind, z. B. von Gemischen aus Baumwolle, Seide, Wolle mit Polyesterfasern oder Polyamidfasern.
Im Gegensatz zum konventionellen Textildruck, bei dem die Druckfarbe bereits sämtliche Fixierchemikalien und Verdickungsmittel für einen Reaktivfarbstoff enthält, müssen beim Ink-Jet-Druck die Hilfsmittel in einem separaten Vorbehandlungsschritt auf das textile Substrat aufgebracht werden.
Die Vorbehandlung des textilen Substrates, wie zum Beispiel Cellulose- und Celluloseregeneratfasern sowie Seide und Wolle - erfolgt vor dem Bedrucken mit einer wässrigen alkalischen Flotte. Zur Fixierung von Reaktivfarbstoffen benötigt man Alkali, beispielsweise Natriumcarbonat, Natriumbicarbonat, Natriumacetat, Trinatriumphosphat, Natriumsilikat, Natriumhydroxid, Alkalispender wie zum Beispiel Natriumchloracetat, Natriumformiat, hydrotrope Substanzen wie zum Beispiel Harnstoff, Reduktionsinhibitoren, wie zum Beispiel Natriumnitrobenzolsulfonate, sowie Verdickungsmittel, die das Fliessen der Motive beim Aufbringen der Druckfarbe verhindern, dies sind beispielsweise Natriumalginate, modifizierte Polyacrylate oder hochveretherte Galaktomannane.
Diese Reagenzien zur Vorpräparierung werden mit geeigneten Auftragsgeräten, beispielsweise mit einem 2- oder 3-Walzenfoulard, mit berührungslosen Sprühtechnologien, mittels Schaumauftrag oder mit entsprechend angepassten Ink-Jet-Technologien in definierter Menge gleichmäßig auf das textile Substrat aufgebracht und anschließend getrocknet.
Nach dem Bedrucken wird das textile Fasermaterial bei 120 bis 150 °C getrocknet und anschließend fixiert.
Die Fixierung der mit Reaktivfarbstoffen hergestellten Ink-Jet-Drucke kann erfolgen bei Raumtemperatur, oder mit Sattdampf, mit überhitztem Dampf, mit Heißluft, mit Mikrowellen, mit Infrarotstrahlung, mit Laser- oder Elektronenstrahlen oder mit anderen geeigneten Energieübertragungsarten.
Man unterscheidet ein- und zweiphasige Fixierungsprozesse:
Bei der einphasigen Fixierung befinden sich die zur Fixierung notwendigen Chemikalien bereits auf dem textilen Substrat.
Bei der zweiphasigen Fixierung kann diese Vorbehandlung unterbleiben. Zur Fixierung wird nur Alkali benötigt, das nach dem Ink-Jet-Druck vor dem Fixierprozess ohne Zwischentrocknung aufgebracht wird. Auf weitere Zusätze wie Harnstoff oder Verdickungsmittel kann verzichtet werden.
Im Anschluss an die Fixierung wird die Drucknachbehandlung durchgeführt, die die Voraussetzung für gute Echtheiten, hohe Brillanz und einen einwandfreien Weißfond ist.

Die erfindungsgemäßen Farbstoffmischungen zeichnen sich auf den Cellulosefasermaterialien bei Anwendung in den Färbe- und Druckverfahren durch eine hervorragende Farbstärke aus, die teilweise auch in Gegenwart keiner oder nur sehr geringer Alkali- oder Erdalkaliverbindungen erreicht werden kann. In diesen speziellen Fällen benötigt man beispielsweise für eine geringe Farbtiefe kein Elektrolytsalz, für eine mittlere Farbtiefe nicht mehr als 5g/l an Elektrolytsalz und für große Farbtiefen nicht mehr als 10 g/l an Elektrolytsalz. Eine geringe Farbtiefe bezeichnet hierbei den Einsatz von 2 Gew.-% Farbstoff bezogen auf das zu färbende Substrat, eine mittlere Farbtiefe bezeichnet den Einsatz von 2 bis 4 Gew.-% Farbstoff bezogen auf das zu färbende Substrat und eine große Farbtiefe bezeichnet den Einsatz von 4 bis 10 Gew.-% Farbstoff bezogen auf das zu färbende Substrat.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf. Weiterhin zeigen die Cellulosefärbungen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit leicht auswaschen lassen.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. beispielsweise H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Badeingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Dadie Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, orangefarbene bis rote Färbungen mit sehr guten Echtheitseigenschaften.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Natrium- oder Kaliumsalze, hergestellt und isoliert und in Form ihrer Salze zum Färben verwendet werden. Die in den nachfolgenden Beispielen, insbesondere Tabellenbeispielen, genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Beispiel 1

### 20 Teile eines elektrolythaltigen Farbstoffpulvers, das den roten Disazofarbstoff der Formel (I-2)

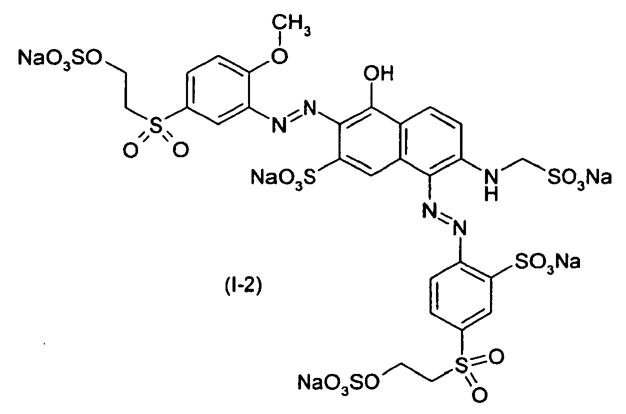

in 70%-igem Anteil enthält und 80 Teile eines elektrolythaltigen Farbstoffpulvers, das den goldgelben Azofarbstoff der Formel (Ga-1) 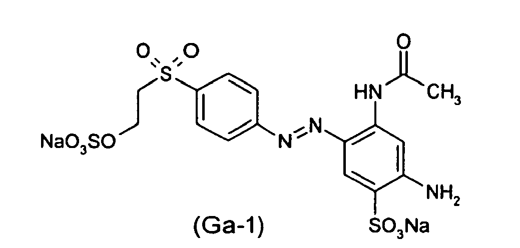 in 70%-igem Anteil enthält, werden mechanisch miteinander gemischt.

Die resultierende, erfindungsgemäße Farbstoffmischung liefert unter den für Reaktivfarbstoffe üblichen Färbebedingungen, beispielsweise auf Baumwolle, orangefarbene bis orangerote Färbungen und Drucke.

### Beispiel 2

20 Teile eines elektrolythaltigen Farbstoffpulvers, das den scharlachroten Disazofarbstoff der Formel (I-3) 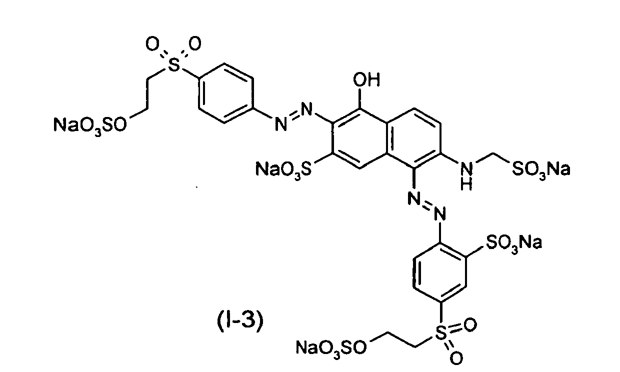 in 75%-igem Anteil enthält und 80 Teile eines elektrolythaltigen Farbstoffpulvers, das den gelben Azofarbstoff der Formel (Gf-1) 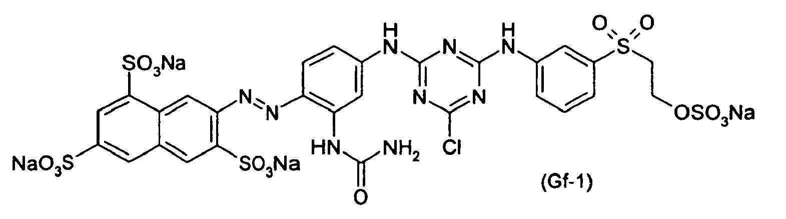 in 65%-igem Anteil enthält, werden in 500 Teilen Wasser gelöst und die erhaltene Farbstofflösung auf pH 5,5-6,5 eingestellt. Durch Eindampfen dieser Farbstofflösung erhält man eine Farbstoffmischung, die auf Baumwolle unter den für

Reaktivfarbstoffe üblichen Färbebedingungen orangefarbene Färbungen und Drucke liefert. - Alternativ kann die erhaltene Farbstofflösung auch durch Zusatz eines Phosphat-Puffers bei pH 5,5 - 6 gepuffert und durch weitere Verdünnung bzw. Konzentration als Flüssigmarke bestimmter Stärke eingestellt werden.

### Beispiel 3

180 Teile 4-(β-Sulfatoethylsulfonyl)-anilin werden in 440 Teilen Eiswasser und 116 Teilen 30%-iger Salzsäure suspendiert und durch Zutropfen von 112 Teilen 40%-iger Natriumnitritlösung diazotiert. Nach Entfernung des Nitritüberschusses mit Amidosulfonsäure gibt man hierzu 67 Teile 4-Hydroxy-7-(sulfomethyl-amino)-naphthalin-2-sulfonsäure, die durch Umsetzung von 48 Teilen 7-Amino-4-hydroxy-naphthalin-2-sulfonsäure mit 32 Teilen Formaldehydnatriumbisulfit in wässrigem Medium bei pH 5,5 - 6 und 45°C hergestellt wurde sowie 23 Teile 2,4-Diaminobenzolsulfonsäure und kuppelt zunächst in erster Stufe bei pH 1 bis 2 unterhalb 20°C zu Einer Mischung von zwei Monoazofarbstoffen gemäß den Formeln (15-4) und (Ga-2). Der angegebene pH-Bereich wird dabei durch Zusatz von festem Natriumhydrogencarbonat eingestellt und während der Kupplungsreaktion gehalten.

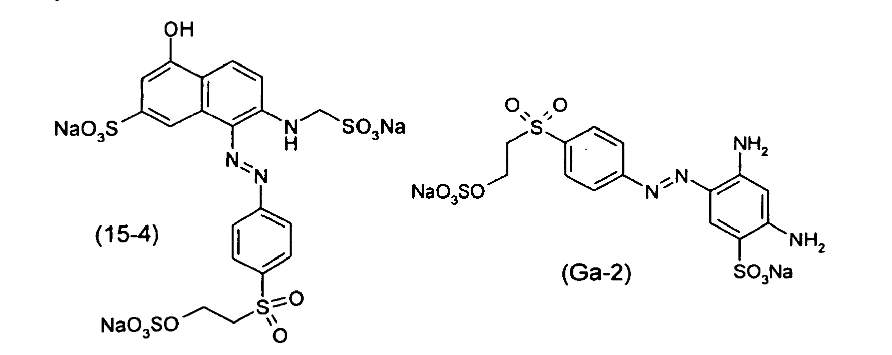

Nach beendeter erster Kupplung stellt man unterhalb 25°C mit Natriumcarbonat pH 5,5 - 6,5 ein. Die na ch beendeter zweiter Kupplungsreaktion entstandene 2 : 1 - Mischung der beiden Azofarbstoffe (1-4) und (Gb-1) wird durch Sprühtrocknung isoliert.

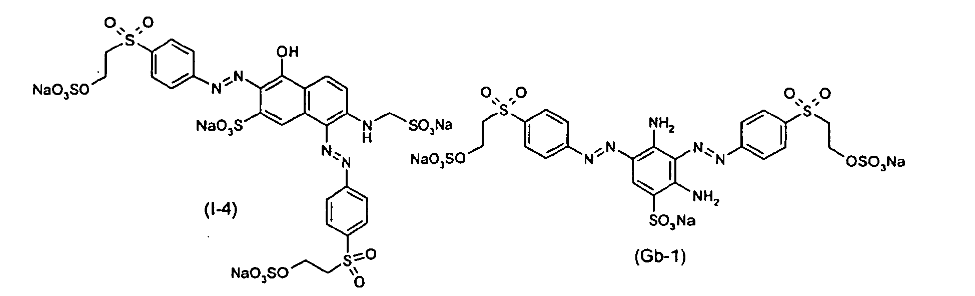

Die erhaltene, erfindungsgemäße Farbstoffmischung färbt Baumwolle in orangefarbenen Tönen.

### Beispiele 4 bis 62:

Die nachfolgenden Tabellenbeispiele beschreiben weitere erfindungsgemäße Mischungen der Farbstoffe der allgemeinen Formeln (I) und (Ga) - (Gf), die jeweils in Form der Natriumsalze angeführt sind. Die Mischungsverhältnisse sind in Gewichtsprozent angegeben. Die Farbstoffmischungen liefern nach den für Reaktivfarbstoffen üblichen Färbemethoden, beispielsweise auf Baumwolle, orange-/scharlachrote bis braunrote Färbungen.
Farbstoff-Mischungen gemäß Beispiel 1 bis 3

| Beispiel | Farbstoff nach allg. Formel (I) | Farbstoff nach allg. Formel (G) | Verhältnis (I) : (G) |
|---|---|---|---|
| 4 | (I-2) | 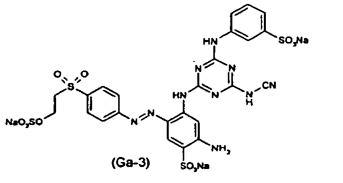 | 75 : 25 |
| 5 | (I-3) | (Ga-4) | 60 : 40 |
| 6 | (I-4) | (Ga-1) | 50: 50 |
| 7 | 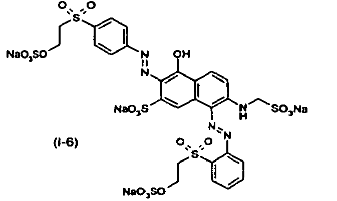 | 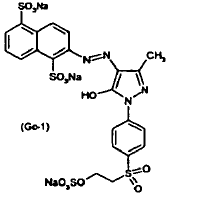 | 67 : 33 |
| 8 | 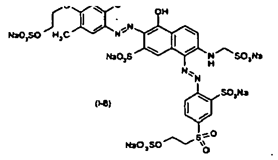 | 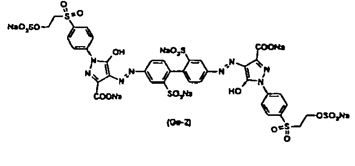 | 85: 15 |
| 9 | 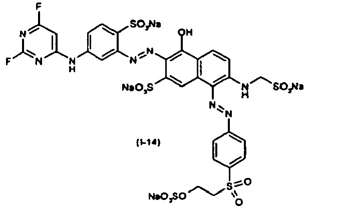 | 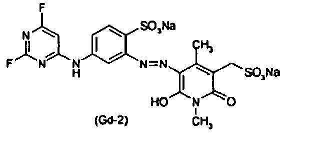 | 72 : 28 |
| 10 | 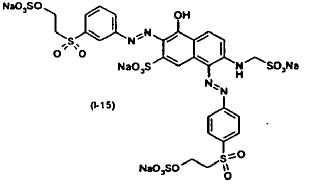 | 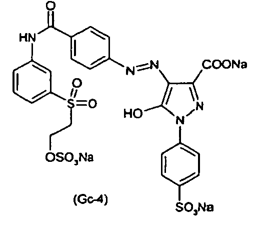 | 50 : 50 |
| 11 | 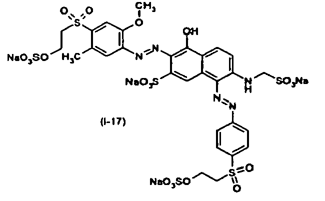 | 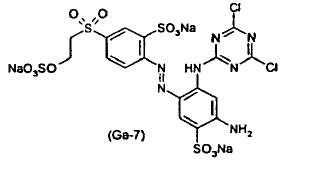 | 60 : 40 |
| 12 | 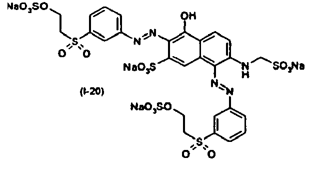 | (Gc-5) | 90 : 10 |
| 13 | 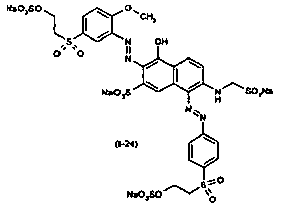 | (Ga-1) | 68 : 32 |
| 14 | 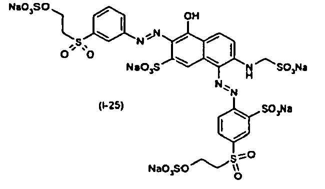 | (Ge-1) | 80 : 20 |
| 15 | 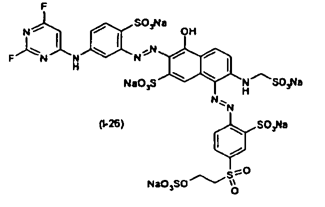 | (Gb-2) | 50 : 50 |
| 16 | 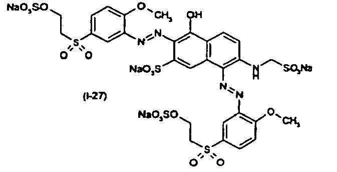 | (Ga-2) | 30 : 70 |
| 17 | 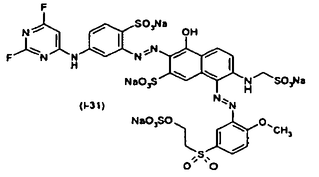 | (Gf-3) | 85 : 15 |
| 18 | 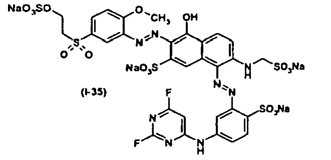 | (Ga-6) | 67 : 33 |
| 19 | 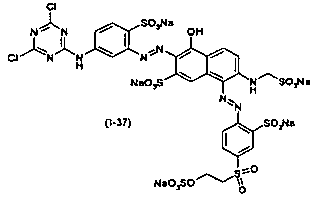 | (Ga-6) | 55 : 45 |
| 20 | 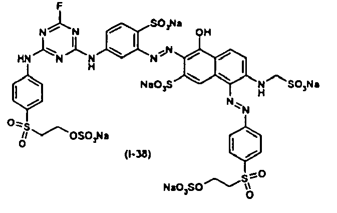 | (Ge-1) | 85 : 15 |
| 21 | 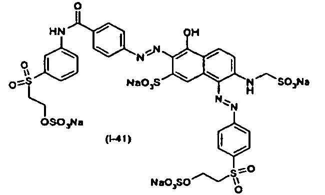 | (Gf-3) | 45 : 55 |
| 22 | 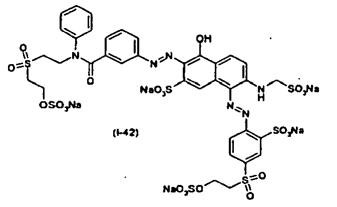 | (Ga-3) | 80 : 20 |
| 23 | 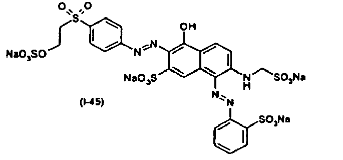 | (Ga-1) | 50 : 50 |
| 24 | 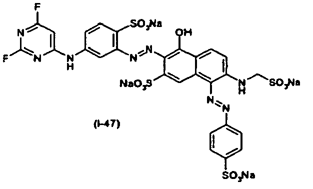 | (Ga-8) | 60 : 40 |
| 25 | 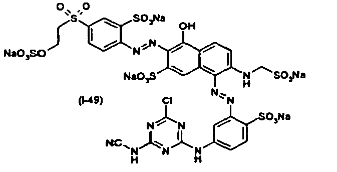 | (Gf-1) | 20 : 80 |
| 26 | (I-2) | (Gf-2) | 70 : 30 |
| 27 | (I-3) | (Gb-2) | 75 : 25 |
| 28 | (I-4) | (Ga-2) | 67 : 33 |
| 29 | (I-6) | (Gd-1) | 50 : 50 |
| 30 | (I-26) | (Ga-8) | 68:32 |
| 31 | (I-45) | (Ga-2) | 60: 40 |
| 32 | (I-47) | (Gf-2) | 55:45 |
| 33 | (I-4) | (Gf-3) | 80: 20 |
| 34 | (I-14) | (Gf-4) | 80: 20 |
| 35 | (I-24) | (Ga-8) | 70: 30 |
| 36 | (I-37) | (Ga-8) | 25: 75 |
| 37 | (I-41) | (Gb-1) | 65 : 35 |

### Farbstoff-Mischungen gemäß Beispiel 3

| Beispiel | Farbstoff nach allg. Formel (I) | Farbstoff nach allg. Formel (G) | Verhältnis (I): (G) |
|---|---|---|---|
| 38 | (I-3) | (Gb-2) | 75:25 |

| Beispiel | Farbstoff nach allg. Formel (I) | Farbstoff nach allg. Formel (G) | Verhältnis (I): (G) |
|---|---|---|---|
| 39 | (I-3) | (Ga-3) | 70 : 30 |
| 40 | (I-4) | (Ga-3) | 45 : 55 |
| 41 | (I-6) | (Ga-3) | 20 : 80 |
| 42 | (I-45) | (Ga-3) | 67 : 33 |
| 43 | (I-3) | (Ga-5) | 65 : 35 |
| 44 | (I-4) | (Ga-5) | 40 : 60 |
| 45 | (I-6) | (Ga-5) | 30 : 70 |
| 46 | (I-45) | (Ga-5) | 67 : 33 |
| 47 | (I-3) | (Ga-8) | 70 : 30 |
| 48 | (I-4) | (Ga-8) | 50 : 50 |
| 49 | (I-6) | (Ga-8) | 30 : 70 |
| 50 | (I-45) | (Ga-8) | 67 : 33 |
| 51 | (I-49) | (Ga-9) | 80 : 20 |
| 52 | (I-8) | (Gc-3) | 10 : 90 |
| 53 | (I-17) | (Gc-3) | 30 : 70 |
| 54 | (I-41) | (Gc-4) | 60 : 40 |
| 55 | (I-2) | (Gc-5) | 50 : 50 |
| 56 | (I-24) | (Gc-5) | 20 : 80 |
| 57 | (I-27) | (Gc-5) | 25 : 75 |
| 58 | (I-35) | (Gc-5) | 33 : 67 |
| 59 | (I-14) | (Gd-2) | 50 : 50 |
| 60 | (I-26) | (Gd-2) | 65 : 35 |
| 61 | (I-31) | (Gd-2) | 80 : 20 |
| 62 | (I-47) | (Gd-2) | 90 : 10 |

### Anwendungsbeispiel 1

2 Teile einer gemäß Beispiel 1 - 3 erhaltenen Farbstoffmischung und 50 Teile Natriumchlorid werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann in 30 Minuten auf Endtemperatur (40-80°C) erhöht und diese Temperatur weitere 60-90 Minuten gehalten. Danach wird die gefärbte Ware zunächst 2 Minuten mit Trinkwasser und anschließend 5 Minuten mit E-Wasser gespült. Man neutralisiert die gefärbte Ware bei 40°C in 1000 Teilen einer wäßrigen Lösung, die 1 Teil einer 50%igen Essigsäure enthält, während 10 Minuten. Mit E-Wasser wird bei 70°C nachgespült und dann 15 Minuten mit einem Waschmittel kochend geseift, nochmals gespült und getrocknet. Man erhält eine orangefarbene bis rote Färbung mit sehr guten Echtheitseigenschaften.

### Anwendungsbeispiel 2

4 Teile einer gemäß Beispiel 1 - 3 erhaltenen Farbstoffmischung und 50 Teile Natriumchlorid werden in 998 Teilen Wasser gelöst und 5 Teile Natriumcarbonat, 2 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke orangefarbene bis rote Färbung mit sehr guten Echtheitseigenschaften.

### Anwendungsbeispiel 3

Ein textiles Flächengebilde, bestehend aus mercerisierter Baumwolle wird mit einer Flotte, enthaltend 35 g/l Natriumcarbonat kalz, 50 g/l Harnstoff und 150 g/l einer niedrigviskosen Na-Alginatlösung (6%) foulardiert und dann getrocknet. Die Flottenaufnahme beträgt 70%. Auf das so vorbehandelte Textil wird eine wässrige Tinte, enthaltend
8% einer Farbstoffmischung gemäß Beispiel 1
20% 1,2-Propandiol
0,01 % Mergal K9N und
71,99 % Wasser
mit einem Drop-on-Demand (Bubble-Jet) Inkjet Druckkopf aufgedruckt. Der Druck wird vollständig getrocknet. Die Fixierung erfolgt mittels Sattdampf bei 102 ° C während 8 Minuten.
Anschliessend wird der Druck warm gespült, mit heissem Wasser bei 95 ° C einer Echtheitswäsche unterzogen, warm gespült und dann getrocknet. Man erhält einen rotorangenen Druck mit hervorragenden Gebrauchsechtheiten.

## Patentansprüche

1. Reaktivfarbstoffmischung, bestehend aus einem oder mehreren Farbstoffen der nachstehend angegebenen und definierten allgemeinen Formel (I)in einer Menge von 10 bis 90 Gew. % 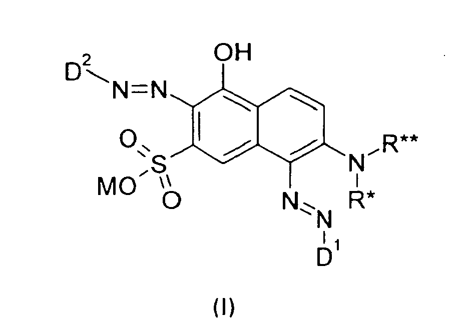 und einem oder mehreren Monoazofarbstoffen der allgemeinen Formeln (15) bis (16), jeweils in einer Menge von 0 - 10 Gew.-%, 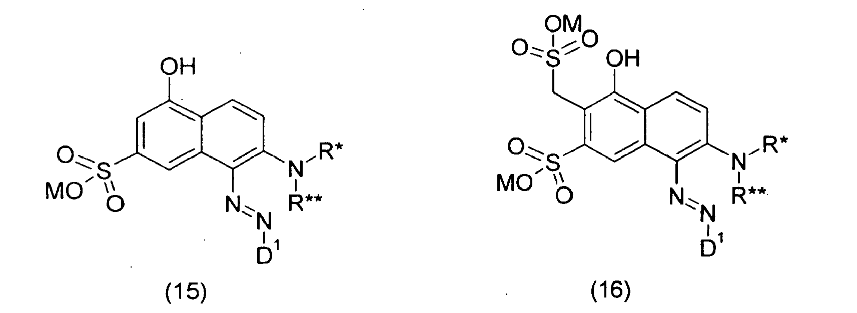 und einem oder mehreren Farbstoffe der nachstehend angegebenen und definierten allgemeinen Formeln (Ga) - (Gf), unabhängig voneinander jeweils in einer Menge von 10 bis 90 Gew.-% 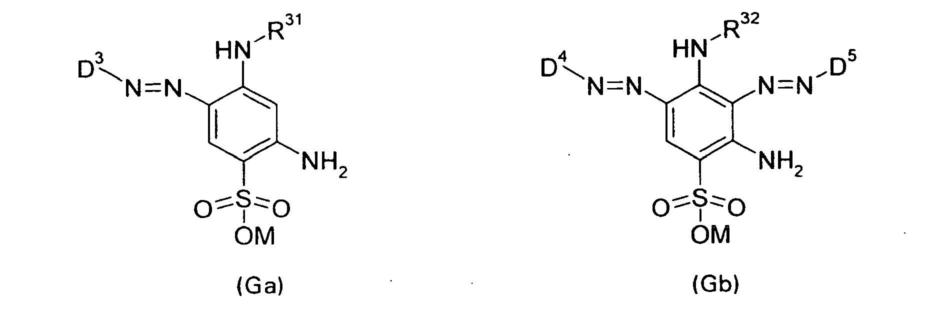 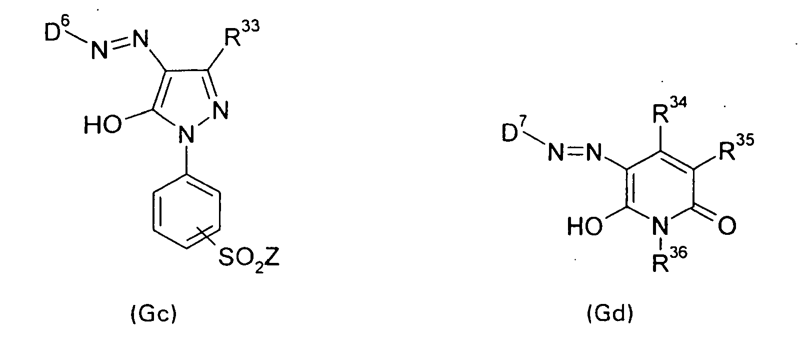 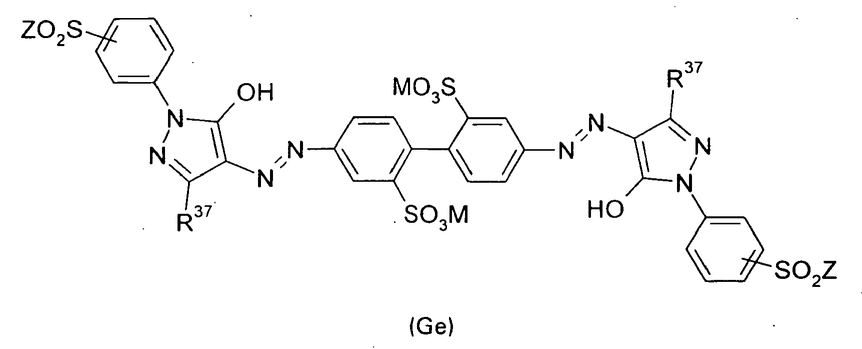 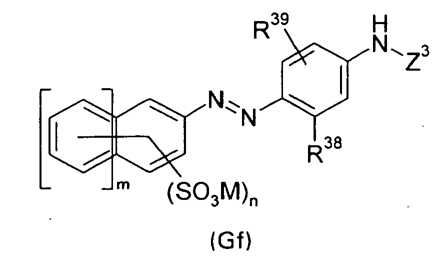 in welchen bedeuten:
D¹ bis D⁷ sind unabhängig voneinander eine Gruppe der allgemeinen Formel (1) 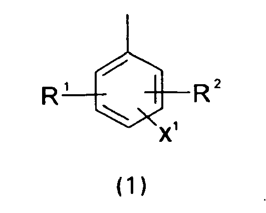 worin
R¹ und R² unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
X¹ für Wasserstoff oder eine Gruppe der Formel -SO₂-Z steht, wobei
Z -CH=CH₂, -CH₂CH₂Z¹ oder Hydroxy bedeutet, worin
Z¹ Hydroxy oder eine unter Alkaliwirkung abspaltbare Gruppe ist oder
D¹ bis D⁷bedeuten unabhängig voneinander eine Naphthylgruppe der allgemeinen Formel (2) 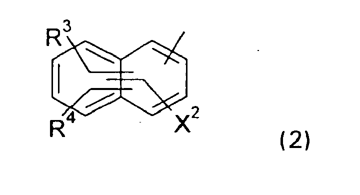 worin
R³ und R⁴ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
X² eine der Bedeutungen von X¹ hat; oder
D¹ bis D⁷sind unabhängig voneinander eine Gruppe der allgemeinen Formel (3) 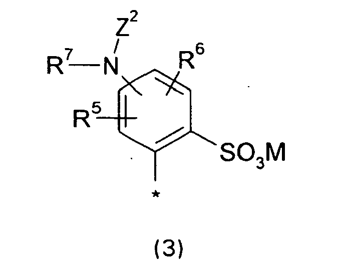 worin
R⁵ und R⁶ unabhängig voneinander eine der Bedeutungen von R¹ und R² haben;
R⁷ ist Wasserstoff, (C₁-C₄)-Alkyl, unsubstituiertes oder durch (C₁-C₄)-Alkyl, (C₁-C₄)-Alkoxy, Sulfo, Halogen oder Carboxy substituiertes Phenyl; und
Z² ist eine Gruppe der allgemeinen Formel (4) oder (5) oder (6) 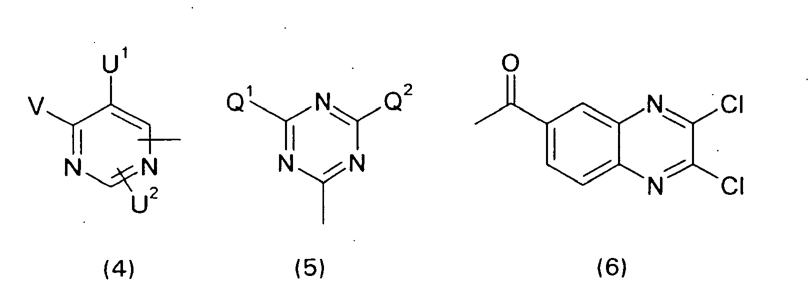
worin
V Fluor oder Chlor bedeutet;
U', U² unabhängig voneinander Fluor, Chlor oder Wasserstoff sind;
und
Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (7) oder (8) bedeuten 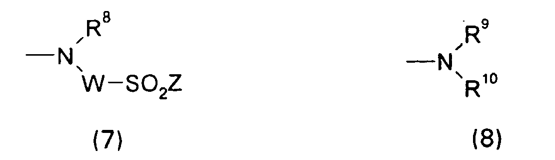 worin
R⁸ Wasserstoff oder (C₁-C₆)-Alkyl, Sulfo-(C₁-C₆)-Alkyl oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
R⁹ und R¹⁰ haben unabhängig voneinander eine der Bedeutungen von R⁸, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfonyl, -NR¹¹ mit R¹¹= (C₁-C₆)-Alkyl ist;
W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfonyl, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
Z die obengenannte Bedeutung hat; oder
D¹ bis D⁷ stehen unabhängig voneinander für eine Gruppe der allgemeinen Formel (9) 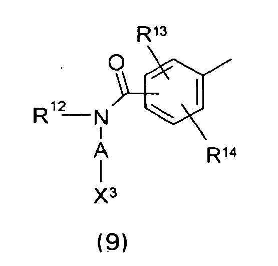 worin
R¹² Wasserstoff, (C₁-C₄)-Alkyl, Aryl oder ein substituierter Arylrest ist;
R¹³ und R¹⁴ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen sind; und
A eine Phenylengruppe der allgemeinen Formel (10) ist 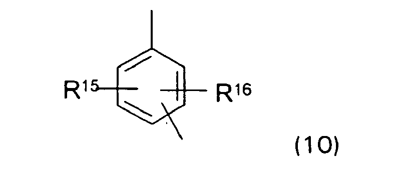 worin
R¹⁵ und R¹⁶ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten; oder
A ist eine Naphthylengruppe der allgemeinen Formel (11) 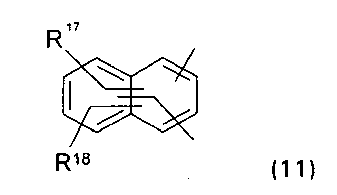 worin
R¹⁷ und R¹⁸ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten; oder
A ist eine Polymethylengruppe der allgemeinen Formel (12)
-(CR¹⁹R²⁰)ₖ- (12)
worin
k eine ganze Zahl größer 1 ist und
R¹⁹ und R²⁰ unabhängig voneinander Wasserstoff, (C₁-C₄)-Alkyl, (C₁-C₄)-Alkoxy, Hydroxy, Cyano, Amido, Halogen oder Aryl sind; und
X³ eine der Bedeutungen von X¹ hat; und
R * eine Gruppe der Formel (14)
-CH₂-SO₃M (14)
ist;
R** Wasserstoff oder (C₁-C₄)-Alkyl ist;
R³¹ Wasserstoff, Acetyl, Carbamoyl ist oder für eine Gruppe der allgemeinen Formel (4) oder (5) oder (14) steht,
R³² Wasserstoff oder eine Gruppe der allgemeinen Formel (14) ist,
R³³ Methyl, Carboxy oder Carboxyalkyl mit C₁- bis C₄-Alkyl ist,
R³⁴ Wasserstoff oder Methyl ist,
R³⁵ Wasserstoff, Cyano, Carbamoyl, Carboxy oder eine Gruppe der allgemeinen Formel (14) ist,
R³⁶ Methyl, Ethyl oder β-Sulfoethyl ist,
R³⁷ Methyl, Carboxy oder Carboxyalkyl mit C₁- bis C₄-Alkyl ist,
R³⁸ Acetamido, Ureido, Methyl oder Methoxy ist,
R³⁹ Wasserstoff, Methyl oder Methoxy ist,
m 0 oder 1 ist,
n 1, 2 oder 3 ist,
Z³ eine der Bedeutungen von Z² hat, und
M Wasserstoff, ein Alkalimetall oder ein Äquivalent eines Erdalkalimetalls bedeutet, wobei
die Farbstoffe der allgemeinen Formeln (I) und (Ga) - (Gf) mindestens eine faserreaktive Gruppe der Formel -SO₂-Z oder -Z² enthalten.

2. Reaktivfarbstoffmischung gemäß Anspruch 1, worin R** für Wasserstoff steht.

3. Reaktivfarbstoffmischung gemäß Anspruch 1 und/oder 2, **dadurch gekennzeichnet, dass** Z Vinyl, β-Chlorethyl oder β-Sulfatoethyl bedeutet.

4. Reaktivfarbstoffmischung gemäß mindestens einem der Ansprüche 1 bis 3, **dadurch gekennzeichnet, dass** Q¹ und Q² in der allgemeinen Formel (5) unabhängig voneinander Fluor, Chlor, Cyanamido, Morpholino, 2-Sulfophenylamino, 3-Sulfophenylamino, 4-Sulfophenylamino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino, N-Methyl-N-(2-(2-sulfatoethylsulfonyl)-ethyl)-amino oder N-Phenyl-N-(2-(2-sulfatoethylsulfonyl)-ethyl)-amino bedeuten.

5. Verfahren zur Herstellung einer Farbstoffmischung gemäß einem oder mehreren der Ansprüche 1 bis 4 **dadurch gekennzeichnet, dass** die Einzelfarbstoffe der Formeln (I), (15), (16) und (Ga)-(Gf) im vorgegebenen Verhältnis entweder in fester Form mechanisch miteinander vermischt werden oder in Form der wässrigen Lösungen gemischt werden.

6. Verfahren zur Herstellung einer Farbstoffmischung gemäß einem oder mehreren der Ansprüche 1 bis 4, für den Fall, daß D² und D³ und/oder D⁵ und/oder D⁶ und/oder D⁷ gemäß den allgemeinen Formeln (I) und (Ga) und/oder (Gb) und/oder (Gc) und/oder (Gd) gleiche Bedeutung besitzen, **dadurch gekennzeichnet, daß** man ein Amin der allgemeinen Formel (17)
D² - NH₂ (17),
worin D² wie in Anspruch 1 angegeben definiert ist, in üblicher Weise diazotiert und die erhaltene Diazoniumverbindung anschließend mit einer wässrigen Lösung oder Suspension einer Mischung mit festgelegtem Verhältnis eines Monoazofarbstoffs gemäß der allgemeinen Formel (15) und mindestens eines Kupplers der allgemeinen Formel (13) und/oder (18) und/oder (19) und/oder eines Monoazofarbstoffs gemäß der allgemeinen Formel (20), 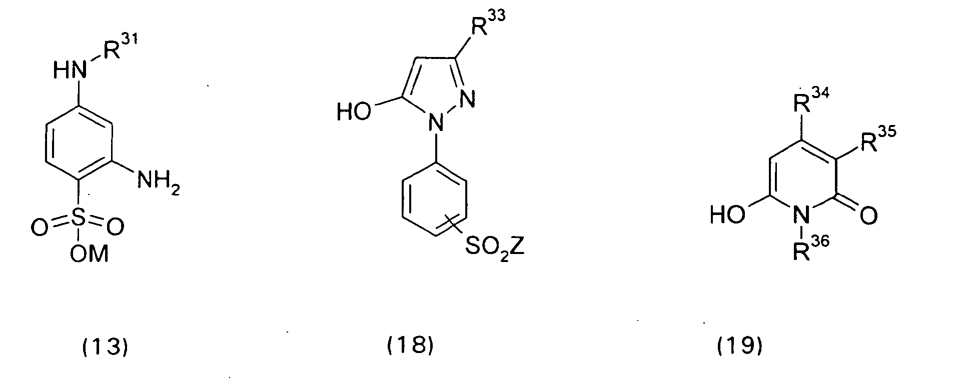 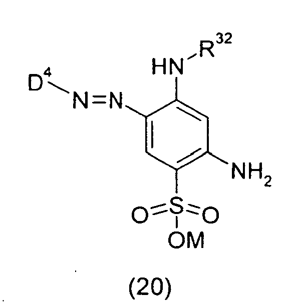 worin D⁴, R*, R**, R³¹, R³², R³³, R³⁴, R³⁵, R³⁶, Z und M wie in Anspruch 1 angegeben definiert sind, umsetzt.

7. Verfahren zur Herstellung einer Farbstoffmischung gemäß mindestens einem der Ansprüche 1 bis 4, für den Fall, daß die Gruppen D¹, D² und D⁴ , D⁵ gemäß den allgemeinen Formeln (I) und (Gb) gleiche Bedeutung besitzen, **dadurch gekennzeichnet, daß** man ein Amin der allgemeinen Formel (21),
D¹-NH₂ (21),
worin D¹ wie in Anspruch 1 angegeben definiert ist, in üblicher Weise diazotiert und auf eine Mischung der Kupplungskomponenten (22) und (23), 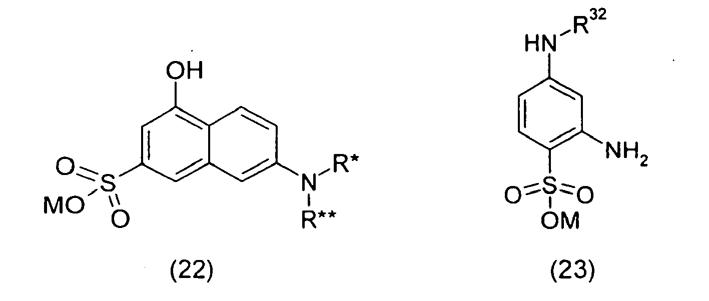 worin R*, R**, R³² und M wie in Anspruch 1 angegeben definiert sind, in erster Stufe kuppelt und anschließend zu einer Mischung der Farbstoffe der allgemeinen Formeln (I) und (Gb) weiter umsetzt.

8. Wässrige Flüssigpräparation, enthaltend eine Farbstoffmischung nach mindestens einem der Ansprüche 1 bis 4 mit einem Gesamtfarbstoffgehalt von 5 - 50 Gew.-%.

9. Verwendung einer Reaktivfarbstoffmischung gemäß einem oder mehreren der Ansprüche 1 bis 4 zum Färben oder Bedrucken von hydroxy- und/oder carbonamidgruppen-haltigem Fasermaterial.

10. Wässrige Drucktinte für den Textildruck nach dem Ink-Jet-Verfahren, enthaltend eine Farbstoffmischung gemäß einem oder mehreren der Ansprüche 1 bis 4 in Mengen von 0,01 Gew.% bis 40 Gew.% bezogen auf das Gesamtgewicht der Tinte.

11. Verfahren zum Färben, zum konventionellen Bedrucken sowie zum Bedrucken nach dem Ink-Jet-Verfahren von textilen Fasermaterialien, **dadurch gekennzeichnet, dass** man eine Farbstoffmischung einem oder mehreren der Ansprüche 1 bis 4 verwendet.

## Claims

1. Reactive dye mixture consisting of one or more dyes of the herein below indicated and defined general formula (I) in an amount of 10 to 90% by weight 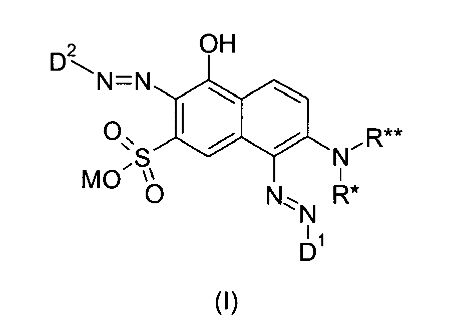 and one or more monoazo dyes of the general formulae (15) to (16) each in an amount of 0-10% by weight, 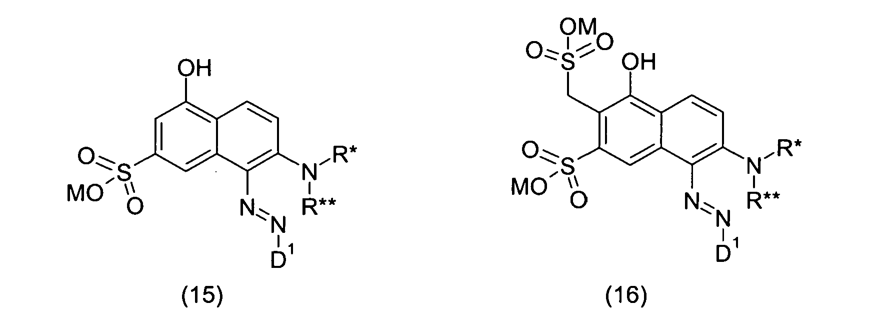 and one or more dyes of the herein below indicated and defined general formulae (Ga)-(Gf), independently in each case in an amount of 10 to 90% by weight 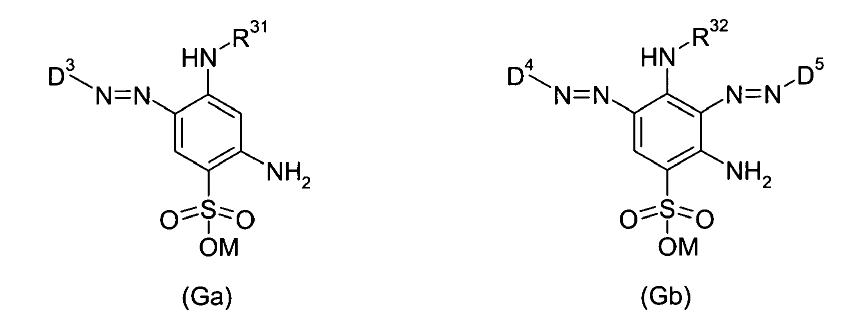 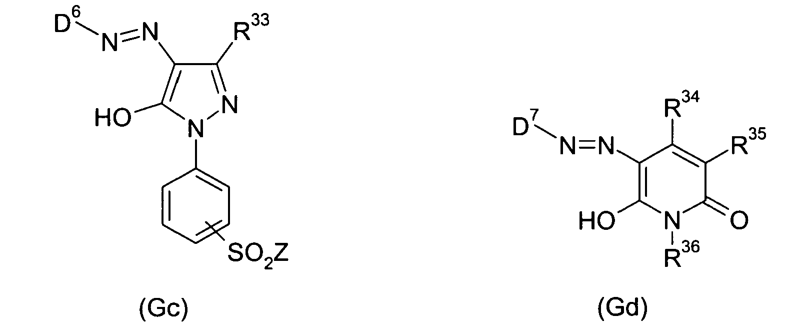 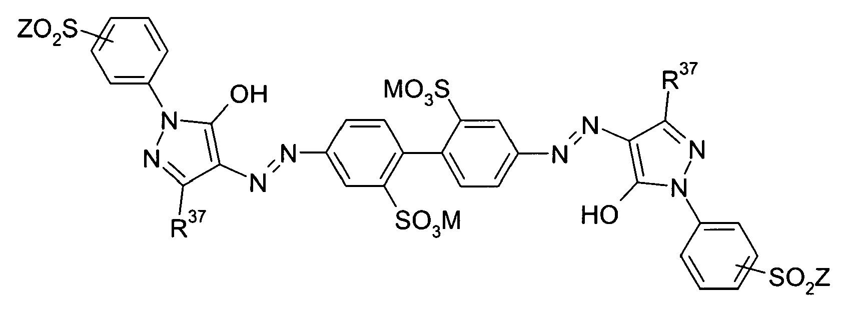 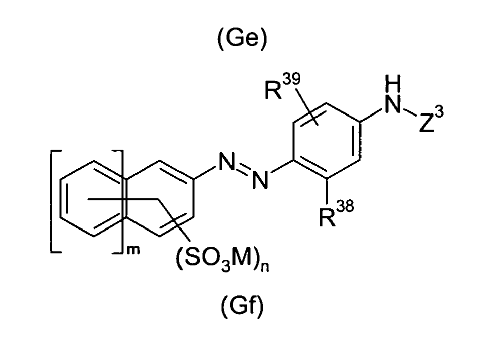 where
D¹ to D⁷ are independently a group of the general formula (1) 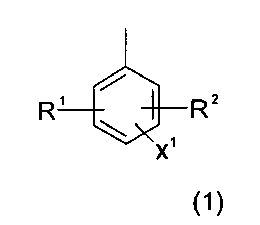 where
R¹ and R² are independently hydrogen, (C₁-C₄)-alkyl, (C₁-C₄)-alkoxy, hydroxyl, sulfo, carboxyl, cyano, nitro, amido, ureido or halogen; and
X¹ is hydrogen or a group of the formula -SO₂-Z, where
Z is -CH=CH₂, -CH₂CH₂Z¹ or hydroxyl,
where
Z¹ is hydroxyl or an alkali-detachable group,
or
D¹ to D⁷ are independently a naphthyl group of the general formula (2) 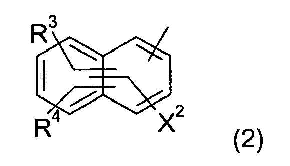 where
R³ and R⁴ are independently hydrogen, (C₁-C₄)-alkyl, (C₁-C₄)-alkoxy, hydroxyl, sulfo, carboxyl, cyano, nitro, amido, ureido or halogen; and
X² has one of the meanings of X¹; or
D¹ to D⁷ are independently a group of the general formula (3) 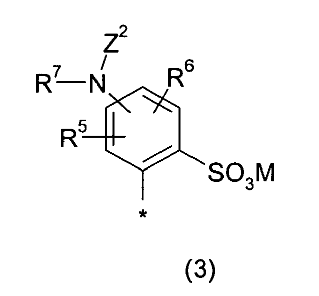 where
R⁵ and R⁶ independently have one of the meanings of R¹ and R²;
R⁷ is hydrogen, (C₁-C₄)-alkyl, unsubstituted or (C₁-C₄)-alkyl-, (C₁-C₄)-alkoxy-, sulfo-, halogen- or carboxyl- substituted phenyl; and
Z² is a group of the general formula (4) or (5) or (6) 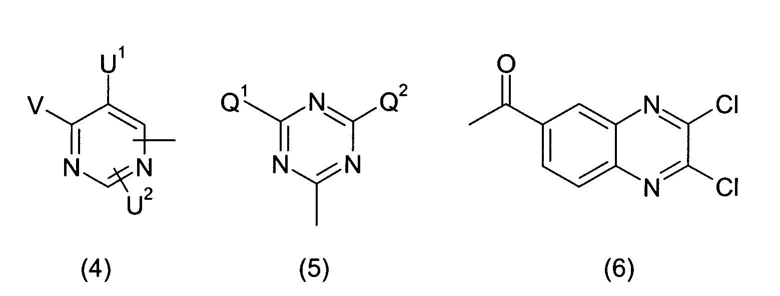
where
V is fluorine or chlorine;
U¹, U² are independently fluorine, chlorine or hydrogen;
and
Q¹, Q² are independently chlorine, fluorine, cyanamido, hydroxyl, (C₁-C₆)-alkoxy, phenoxy, sulfophenoxy, mercapto, (C₁-C₆)-alkylmercapto, pyridino, carboxypyridino, carbamoylpyridino or a group of the general formula (7) or (8) 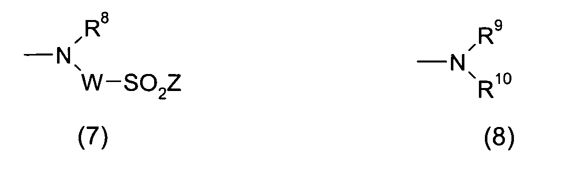 where
R⁸ is hydrogen or (C₁-C₆)-alkyl, sulfo-(C₁-C₆)-alkyl or phenyl which is unsubstituted or substituted by (C₁-C₄)-alkyl, (C₁-C₄)-alkoxy, sulfo, halogen, carboxyl, acetamido, ureido;
R⁹ and R¹⁰ independently have one of the meanings of R⁸ or combine to form a cyclic ring system of the formula -(CH₂)ⱼ-, wherein j is 4 or 5, or alternatively -(CH₂)₂-E-(CH₂)₂-, wherein E is oxygen, sulfur, sulfonyl, -NR¹¹ where R¹¹ = (C₁-C₆)-alkyl;
W is phenylene which is unsubstituted or substituted by 1 or 2 substituents, such as (C₁-C₄)-alkyl, (C₁-C₄)-alkoxy, carboxyl, sulfo, chlorine, bromine, or is (C₁-C₄)-alkylenearylene or (C₂-C₆)-alkylene, which may be interrupted by oxygen, sulfur, sulfonyl, amino, carbonyl, carboxamido, or is phenylene-CONH-phenylene which is unsubstituted or substituted by (C₁-C₄)-alkyl, (C₁-C₄)-alkoxy, hydroxyl, sulfo, carboxyl, amido, ureido or halogen, or is naphthylene which is unsubstituted or substituted by one or two sulfo groups; and
Z is as defined above; or
D¹ to D⁷are independently a group of the general formula (9) 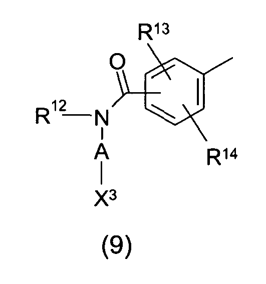 where
R¹² is hydrogen, (C₁-C₄)-alkyl, aryl or a substituted aryl radical;
R¹³ and R¹⁴ are independently hydrogen, (C₁-C₄)-alkyl, (C₁-C₄)-alkoxy, hydroxyl, sulfo, carboxyl, cyano, nitro, amido, ureido or halogen; and
A is a phenylene group of the general formula (10) 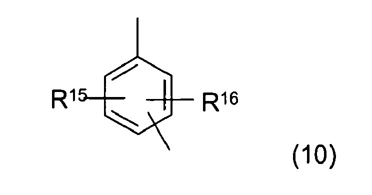 where
R¹⁵ and R¹⁶ are independently hydrogen, (C₁-C₄)-alkyl, (C₁-C₄)-alkoxy, hydroxyl, sulfo, carboxyl, cyano, nitro, amido, ureido or halogen; or
A is a naphthylene group of the general formula (11) 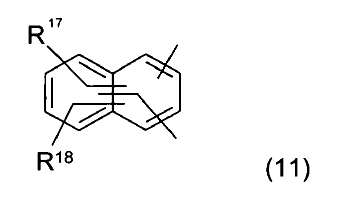 where
R¹⁷ and R¹⁸ are independently hydrogen, (C₁-C₄)-alkyl , (C₁-C₄)-alkoxy, hydroxyl, sulfo, carboxyl, cyano, nitro, amido, ureido or halogen; or
A is a polymethylene group of the general formula (12)
-(CR¹⁹R²⁰)ₖ- (12)
where
k is an integer greater than 1 and
R¹⁹ and R²⁰ are independently hydrogen, (C₁-C₄)-alkyl, (C₁-C₄)-alkoxy, hydroxyl, cyano, amido, halogen or aryl; and
X³ has one of the meanings of X¹; and
R* is a group of the formula (14)
-CH₂-SO₃M (14);
R** is hydrogen or (C₁-C₄)-alkyl;
R³¹ is hydrogen, acetyl, carbamoyl or a group of the general formula (4) or (5) or (14),
R³² is hydrogen or a group of the general formula (14),
R³³ is methyl, carboxyl or carboxyalkyl with C₁- to C₄-alkyl,
R³⁴ is hydrogen or methyl,
R³⁵ is hydrogen, cyano, carbamoyl, carboxyl or a group of the general formula (14),
R³⁶ is methyl, ethyl or β-sulfoethyl,
R³⁷ is methyl, carboxyl or carboxyalkyl with C₁- to C₄-alkyl,
R³⁸ is acetamido, ureido, methyl or methoxy,
R³⁹ is hydrogen, methyl or methoxy,
m is 0 or 1,
n is 1, 2 or 3,
Z³ has one of the meanings of Z², and
M is hydrogen, an alkali metal or one equivalent of an alkaline earth metal wherein
the dyes of the general formulae (I) and (Ga)-(Gf) contain at least one fiber-reactive group of the formula -SO₂-Z or -Z².

2. Reactive dye mixture as per claim 1, wherein R** is hydrogen.

3. Reactive dye mixture as per claim 1 and/or 2, wherein Z is vinyl, β-chloroethyl or β-sulfatoethyl.

4. Reactive dye mixture as per at least one of claims 1 to 3, wherein Q¹ and Q² in the general formula (5) are independently fluorine, chlorine, cyanamido, morpholino, 2-sulfophenylamino, 3-sulfophenylamino, 4-sulfophenylamino, 3-(2-sulfatoethylsulfonyl)phenylamino, 4-(2-sulfatoethylsulfonyl)phenylamino, 3-(vinylsulfonyl)phenylamino, 4-(vinylsulfonyl)phenylamino, N-methyl-N-(2-(2-sulfatoethylsulfonyl)ethyl)amino or N-phenyl-N-(2-(2-sulfatoethylsulfonyl)ethyl)amino.

5. A process for preparing a dye mixture as per one or more of claims 1 to 4, which comprises the individual dyes of the formulae (I), (15), (16) and (Ga)-(Gf) being mixed in the mandated ratio either mechanically in solid form or in the form of aqueous solutions.

6. A process for preparing a dye mixture as per one or more of claims 1 to 4 when D² and D³ and/or D⁵ and/or D⁶ and/or D⁷ as per the general formulae (I) and (Ga) and/or (Gb) and/or (Gc) and/or (Gd) have the same meaning, which comprises an amine of the general formula (17)
D² - NH₂ (17),
where D² is as defined in claim 1, being diazotized in a conventional manner and the diazonium compound obtained being subsequently reacted with an aqueous solution or suspension of a mixture having a fixed ratio of a monoazo dye as per the general formula (15) and of at least one coupler as per the general formula (13) and/or (18) and/or (19) and/or of a monoazo dye as per the general formula (20) 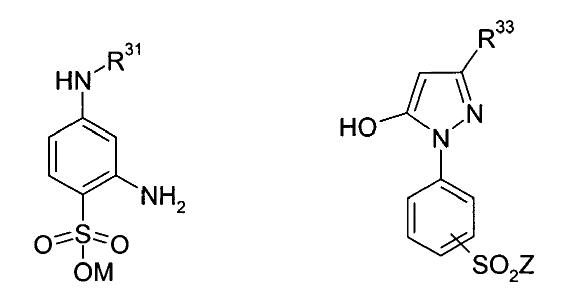 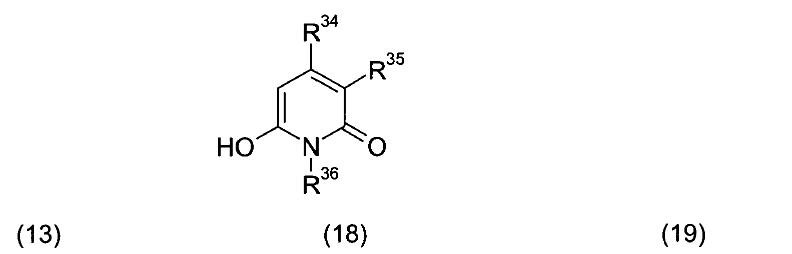 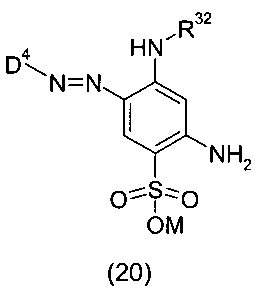 where D⁴, R*, R**, R³¹, R³², R³³, R³⁴, R³⁵, R³⁶, Z and M are each as defined in claim 1.

7. A process for preparing a dye mixture as per at least one of claims 1 to 4 when the groups D¹, D² and D⁴, D⁵ as per the general formulae (I) and (Gb) have the same meaning, which comprises an amine of the general formula (21)
D¹-NH₂ (21),
where D¹ is as defined in claim 1, being diazotized in a conventional manner and coupled onto a mixture of the coupling components (22) and (23) 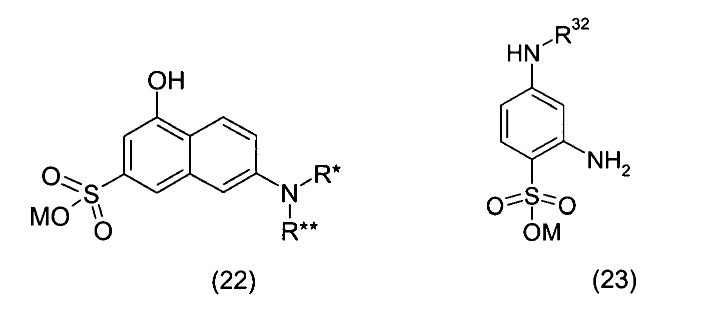 where R*, R**, R³² and M are each as defined in claim 1, in a first stage and subsequently further converted to form a mixture of the dyes of the general formulae (I) and (Gb).

8. Aqueous liquid product comprising a dye mixture according to at least one of claims 1 to 4 having a total dye content of 5 - 50% by weight.

9. Use of a reactive dye mixture as per one or more of claims 1 to 4 for dyeing or printing hydroxyl- and/or carboxamido-containing fiber material.

10. Aqueous printing ink for textile printing by the inkjet process, comprising a dye mixture as per one or more of claims 1 to 4 in amounts from 0.01 % by weight to 40% by weight based on the total weight of the ink.

11. A process for dyeing, conventionally printing and also inkjet printing textile fiber materials, which comprises utilizing a dye mixture as per one or more of claims 1 to 4.

## Revendications

1. Mélange de colorants réactifs, constitué par un
ou plusieurs colorants présentant la formule générale (I) indiquée et définie ci-dessous en une quantité de 10 à 90 % en poids 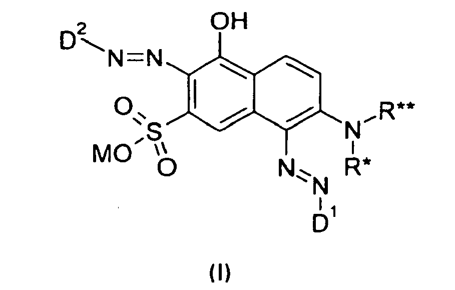 et un ou plusieurs colorants monoazo présentant les formules générales (15)-(16), à chaque fois en une quantité de 0-10 % en poids 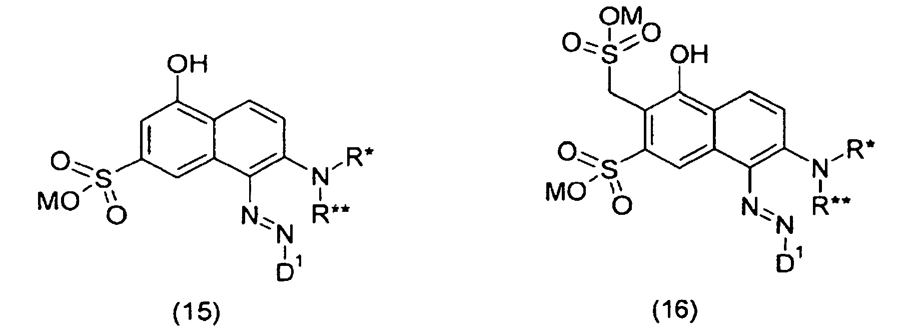 et un ou plusieurs colorants présentant les formules générales (Ga)-(Gf) indiquées et définies ci-dessous, indépendamment les uns des autres à chaque fois en une quantité de 10 à 90 % en poids 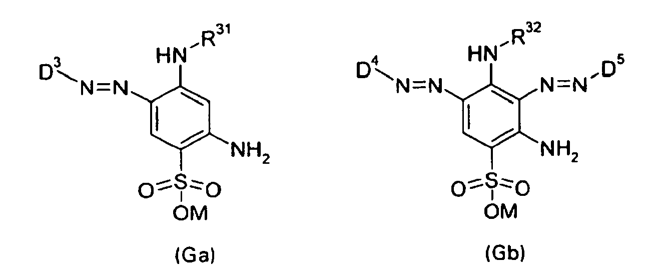 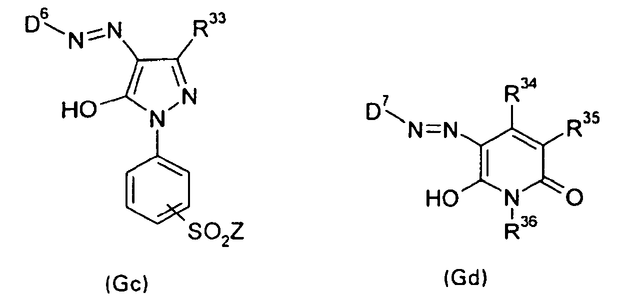 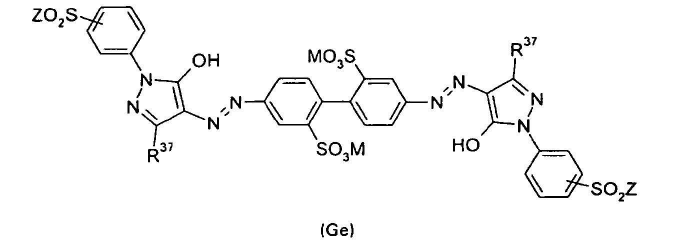 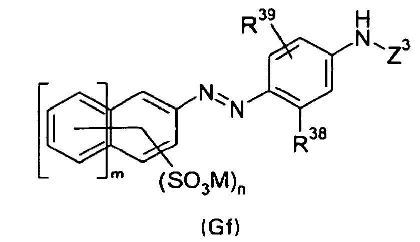 où
D¹ à D⁷ représentent, indépendamment les uns des autres un groupe de formule générale (1) 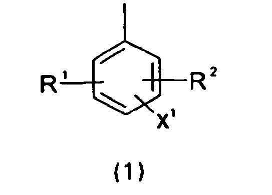 où
R¹ et R² représentent, indépendamment l'un de l'autre, hydrogène, (C₁-C₄)-alkyle, (C₁-C₄)-alcoxy, hydroxy, sulfo, carboxy, cyano, nitro, amido, uréido ou halogène ; et
X¹ représente hydrogène ou un groupe de formule -SO₂-Z, où
Z signifie -CH=CH₂, -CH₂CH₂Z¹ ou hydroxy, où
Z¹ représente hydroxy ou un groupe pouvant être dissocié sous l'effet d'alcalis ou
D¹ à D⁷ signifient, indépendamment les uns des autres un groupe naphtyle de formule générale (2) 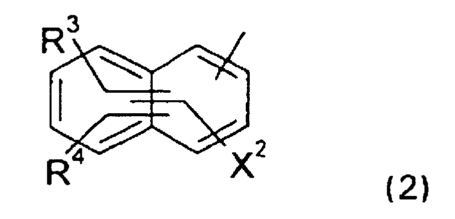 où
R³ et R⁴ représentent, indépendamment l'un de l'autre, hydrogène, (C₁-C₄)-alkyle, (C₁-C₄) -alcoxy, hydroxy, sulfo, carboxy, cyano, nitro, amido, uréido ou halogène ; et
X² présente une des significations de X¹ ; ou
D¹ à D⁷ représentent, indépendamment les uns des autres un groupe de formule générale (3) 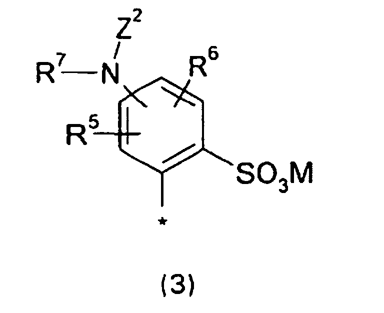 où
R⁵ et R⁶ présentent, indépendamment l'un de l'autre, une des significations de R¹ et R² ;
R⁷ représente hydrogène, (C₁-C₄)-alkyle, phényle non substitué ou substitué par (C₁-C₄) -alkyle, (C₁-C₄)-alcoxy, sulfo, halogène ou carboxy ; et
Z² représente un groupe de formule générale (4) ou (5) ou (6) 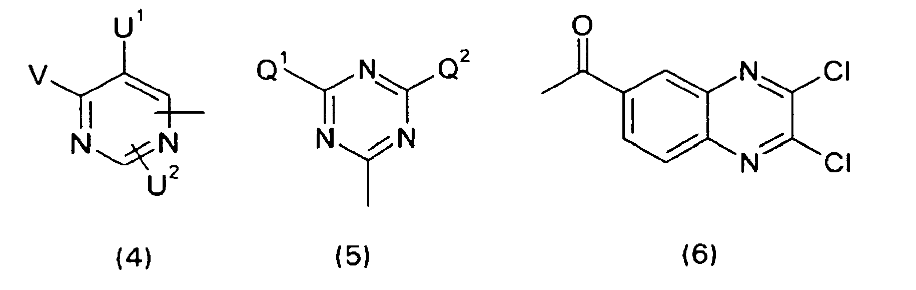 où
V signifie fluor ou chlore;
U¹, U² représentent, indépendamment l'un de l'autre fluor, chlore ou hydrogène ; et
Q¹, Q² signifient indépendamment l'un de l'autre chlore, fluor, cyanamido, hydroxy, (C₁-C₆) -alcoxy, phénoxy, sulfophénoxy, mercapto, (C₁-C₆)-alkylmercapto, pyridino, carboxypyridino, carbamoylpyridino ou un groupe de formule générale (7) ou (8) 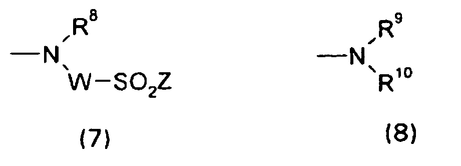
où
R⁸ représente hydrogène ou (C₁-C₆) -alkyle, sulfo-(C₁-C₆)-alkyle ou phényle qui est non substitué ou substitué par (C₁-C₄) -alkyle, (C₁-C₄) -alcoxy, sulfo, halogène, carboxy, acétamido, uréido ;
R⁹ et R¹⁰ présentent, indépendamment l'un de l'autre, une des significations de R⁸ ou forment un système cyclique de formule -(CH₂)ⱼ-, où j vaut 4 ou 5, ou en variante -(CH₂)₂-E-(CH₂)₂-, où E représente oxygène, soufre, sulfonyle, -NR¹¹ avec R¹¹ = (C₁-C₆) -alkyle:
W représente phénylène, qui est non substitué ou substitué par 1 ou 2 substituants, tels que (C₁-C₄) -alkyle, (C₁-C₄) -alcoxy, carboxy, sulfo, chlore, brome, ou représente (C₁-C₄) -alkylène-arylène ou (C₂-C₆)-alkylène, qui peut être interrompu par oxygène, soufre, sulfonyle, amino, carbonyle, carboxamido, ou représente phénylène-CONH-phénylène, qui est non substitué ou substitué par (C₁-C₄)-alkyle, (C₁-C₄)-alcoxy, hydroxy, sulfo, carboxy, amido, uréido ou halogène, ou représente naphtylène, qui est non substitué ou substitué par un ou deux groupes sulfo ; et
Z a la signification susmentionnée ; ou
D¹ à D⁷ signifient, indépendamment les uns des autres un groupe de formule générale (9) 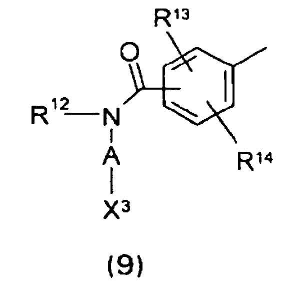 où
R¹² représente hydrogène, un radical (C₁-C₄)-alkyle, aryle ou aryle substitué ;
R¹³ et R¹⁴ représentent, indépendamment l'un de l'autre, hydrogène, (C₁-C₄)-alkyle, (C₁-C₄)-alcoxy, hydroxy, sulfo, carboxy, cyano, nitro, amido, uréido ou halogène ; et
A représente un groupe phénylène de formule générale (10) 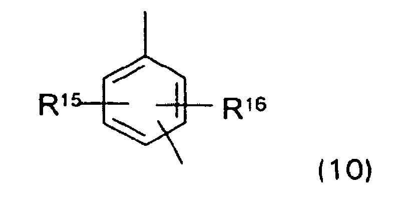 où
R¹⁵ et R¹⁶ représentent, indépendamment l'un de l'autre, hydrogène, (C₁-C₄) -alkyle, (C₁-C₄) -alcoxy, hydroxy, sulfo, carboxy, cyano, nitro, amido, uréido ou halogène ; ou
A représente un groupe naphtylène de formule générale (11) 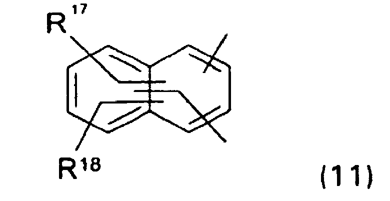 où
R¹⁷ et R¹⁸ représentent, indépendamment l'un de l'autre, hydrogène, (C₁-C₄)-alkyle, (C₁-C₄)-alcoxy, hydroxy, sulfo, carboxy, cyano, nitro, amido, uréido ou halogène ; ou
A représente un groupe polyméthylène de formule générale (12)
-(CR¹⁹R²⁰)ₖ- (12)
où
k est un nombre entier supérieur à 1 et
R¹⁹ et R²⁰ représentent, indépendamment l'un de l'autre, hydrogène, (C₁-C₄)-alkyle, (C₁-C₄)-alcoxy, hydroxy, cyano, amido, halogène ou aryle ; et
X³ présente une des significations de X¹ ; et
R* signifie un groupe de formule (14)
-CH₂-SO₃M (14)
R** représente hydrogène ou (C₁-C₄) -alkyle, ou
R³¹ représente hydrogène, acétyle, carbamoyle ou représente un groupe des formules générales (4) ou (5) ou (14),
R³² représente hydrogène ou un groupe de formule générale (14),
R³³ représente méthyle, carboxy ou carboxyalkyle avec un groupe C₁-C₄-alkyle,
R³⁹ représente hydrogène ou méthyle,
R³⁵ représente hydrogène, cyano, carbamoyle, carboxy ou un groupe de formule générale (14),
R³⁶ représente méthyle, éthyle ou β-sulfoéthyle,
R³⁷ représente méthyle, carboxy ou carboxyalkyle avec un groupe C₁-C₄-alkyle,
R³⁸ représente acétamido, uréido, méthyle ou méthoxy,
R³⁹ représente hydrogène, méthyle ou méthoxy,
m vaut 0 ou 1,
n vaut 1, 2 ou 3,
Z³ présente une des significations de Z², et
M signifie hydrogène, un métal alcalin ou un équivalent d'un métal alcalino-terreux, où
les colorants des formules générales (I) et (Ga)-(Gf) contiennent au moins un groupe réactif avec des fibres de formule -SO₂-Z ou -Z².

2. Mélange de colorants réactifs selon la revendication 1, où R** représente hydrogène.

3. Mélange de colorants réactifs selon la revendication 1 et/ou 2, **caractérisé en ce que** Z signifie vinyle, β-chloroéthyle ou β-sulfatoéthyle.

4. Mélange de colorants réactifs selon au moins l'une quelconque des revendications 1 à 3, **caractérisé en ce que** Q¹ et Q² dans la formule générale (5) signifient, indépendamment l'un de l'autre, fluor, chlore, cyanamido, morpholino, 2-sulfophénylamino, 3-sulfophénylamino, 4-sulfophénylamino, 3-(2-sulfatoéthylsulfonyl)-phénylamino, 4-(2-sulfatoéthylsulfonyl)-phénylamino, 3-(vinylsulfonyl)-phénylamino, 4-(vinylsulfonyl)-phénylamino, N-méthyl-N-(2-(2-sulfatoéthylsulfonyl)-éthyl)-amino ou N-phényl-N-(2-(2-sulfatoéthylsulfonyl)-éthyl)-amino.

5. Procédé pour la préparation d'un mélange de colorants selon l'une ou plusieurs des revendications 1 à 4, **caractérisé en ce que** les différents colorants des formules (I), (15), (16) et (Ga)-(Gf) sont mélangés dans un rapport prédéfini, soit mécaniquement sous forme solide, soit sous forme de solutions aqueuses.

6. Procédé pour la préparation d'un mélange de colorants selon l'une ou plusieurs des revendications 1 à 4, pour le cas où D² et D³ et/ou D⁵ et/ou D⁶ et/ou D⁷ selon les formules générales (I) et (Ga) et/ou (Gb) et/ou (Gc) et/ou (Gd) présenteraient la même signification, **caractérisé en ce qu'**on diazote une amine de formule générale (17)
D² - NH₂ (17),
dans laquelle D² est défini comme indiqué dans la revendication 1, de manière usuelle et on transforme ensuite le composé de diazonium obtenu avec une solution ou une suspension aqueuse d'un mélange, avec un rapport défini, d'un colorant monoazo selon la formule générale (15) et d'au moins un agent de couplage de formule générale (13) et/ou (18) et/ou (19) et/ou d'un colorant monoazo selon la formule générale (20), 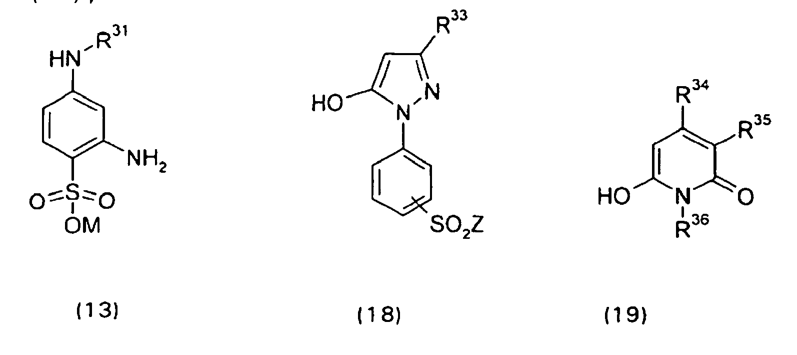 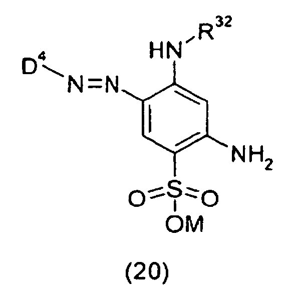 où D⁴, R*, R**, R³¹, R³², R³³, R³⁴, R³⁵, R³⁶, Z et M sont définis comme indiqué dans la revendication 1.

7. Procédé pour la préparation d'un mélange de colorants selon au moins l'une quelconque des revendications 1 à 4, pour le cas où les groupes D¹, D² et D⁴, D⁵ selon les formules générales (I) et (Gb) présenteraient la même signification, **caractérisé en ce qu'**on diazote une amine de formule générale (21)
D¹ - NH₂ (21),
dans laquelle D¹ est défini comme indiqué dans la revendication 1, de manière usuelle puis on couple sur un mélange de composants de couplage (22) et (23), 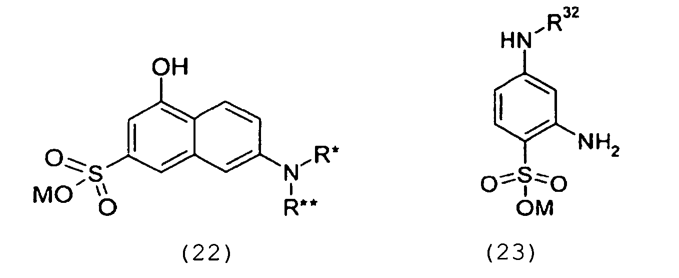 où R*, R**, R³² et M sont définis comme indiqué dans la revendication 1 dans une première étape, puis on transforme en un mélange de colorants des formules générales (I) et (Gb).

8. Préparation liquide aqueuse, contenant un mélange de colorants selon au moins l'une quelconque des revendications 1 à 4 avec une teneur totale en colorants de 5-50 % en poids.

9. Utilisation d'un mélange de colorants réactifs selon l'une ou plusieurs des revendications 1 à 4 pour la teinture ou l'impression d'un matériau fibreux contenant des groupes hydroxy et/ou carboxamide.

10. Encres d'imprimerie aqueuses pour l'impression sur textile selon le procédé par jet d'encre, contenant un mélange de colorants selon l'une ou plusieurs des revendications 1 à 4 en des quantités de 0,01 % en poids à 40 % en poids par rapport au poids total de l'encre.

11. Procédé pour la teinture, l'impression classique ainsi que pour l'impression selon le procédé à jet d'encre de matériaux fibreux textiles, **caractérisé en ce qu'**on utilise un mélange de colorants selon l'une ou plusieurs des revendications 1 à 4.
